# EUROPÄISCHE PATENTSCHRIFT

(11) **EP 2 879 980 B1**
(45) Veröffentlichungstag und Bekanntmachung des Hinweises auf die Patenterteilung: **10.10.2018**
(21) Anmeldenummer: 13745094.6
(22) Anmeldetag: 02.08.2013
(51) Int. Cl.: B65G 65/48

(54) **EINRICHTUNG FÜR DAS AUFNEHMEN VON SCHÜTTGUT MIT EINER AUSTRAGSVORRICHTUNG**
APPARATUS FOR ACCOMMODATING BULK MATERIAL HAVING A DISCHARGE DEVICE
DISPOSITIF POUR RECEVOIR DE LA MATIÈRE EN VRAC POURVU D'UN DISPOSITIF DE DÉCHARGE

(30) Priorität: 03.08.2012 DE 202012102931 U
(43) Veröffentlichungstag der Anmeldung: 10.06.2015
(73) Patentinhaber: Luft- und Thermotechnik Bayreuth GmbH, 95497 Goldkronach (DE)
(72) Erfinder: FRIEDEL, Reimund, 95445 Bayreuth (DE); SCHRÖDER, Daniel, 95444 Bayreuth (DE)
(74) Vertreter: Gauss, Nikolai
(86) Internationale Anmeldenummer: PCT/EP2013/066340
(87) Internationale Veröffentlichungsnummer: WO 2014/020176

(56) Entgegenhaltungen:
- DE-A1- 3 107 966
- DE-A1- 3 406 413
- DE-A1- 3 412 216
- DE-A1- 4 214 491
- DE-B2- 1 940 714
- DE-C- 924 433
- DE-U1- 8 118 614
- DE-U1- 8 610 421
- FR-A- 1 034 396
- GB-A- 1 072 847
- JP-A- S60 106 735
- JP-A- S60 223 726
- JP-A- S60 228 284

## Beschreibung

Die Erfindung betrifft eine Einrichtung für das Aufnehmen von Schüttgut, mit einer Schüttgutaufnahme und mit einer Austragsvorrichtung. Darüber hinaus betrifft die Erfindung eine Anlage für das Behandeln von gasförmigem Fluid, insbesondere für das thermische und/oder katalytische Reinigen von schadstoffbelasteter Abluft, insbesondere von Abluft, die siliziumorganische Verbindungen enthält. Außerdem betrifft die Erfindung ein Verfahren zum Austragen von Schüttgut aus einer Schüttgutaufnahme und ein Verfahren für das Behandeln von gasförmigem Fluid.

Aus der DE 86 10 421 U1 ist eine Einrichtung für das Aufnehmen von Schüttgut bekannt, die am Boden eines Schüttgutbehälters wenigstens einen Räumarm aufweist, der in seiner Arbeitsstellung mittels eines Antriebes eine Drehbewegung um eine Mittenachse des Schüttgutbehälters in Arbeitsdrehrichtung ausführt. Der Räumarm ist um eine um einen Abstand von der Mittenachse liegende und parallel zu derselben verlaufende Schwenkachse bei einer Gegendrehung zur Arbeitsdrehrichtung zur Mitte des Schüttgutbehälters schwenkbar. Der Räumarm ist in einer Ausführung sichelförmig gekrümmt ausgeführt, wobei sein freies äußeres Ende als Spitze ausgebildet ist. Es können auch zwei oder mehrere Räumarme am Umfang verteilt vorgesehen sein. Der Boden der Austragsvorrichtung ist eben ausgeführt. Oberhalb des Bodens ist in dem Schüttgutbehälter ein Staukonus angeordnet, so dass nur das durch den Spalt zwischen der Unterkante des Staukonus und dem Boden durchtretende Schüttgut ausgeräumt wird. Das ausgeräumte Schüttgut fällt in einen Auffangtrichter, der mit einer Ableitung verbindbar ist.

Eine ähnliche Einrichtung mit einer Austragsvorrichtung für einen Schüttgutbunker ist aus der DE 81 18 614 U1 bekannt. Der Räumarm ist dabei an einer Welle eines Antriebes montiert, der in einem Staukonus angeordnet ist.

Der Boden ist ebenfalls als planer Boden ausgeführt. Ferner ist der Räumarm fest an der Welle montiert.

In der DE 33 33 115 C2 ist eine als Bunker ausgebildete Einrichtung für das Aufnehmen von Schüttgut mit einer Austragsvorrichtung beschrieben. Dieser Bunker hat einen Boden, der teilweise eben ist und zu einer mittleren Öffnung hin nach unten schräg abgesenkt ist, d.h. kegelstumpfförmig verläuft. Oberhalb der mittleren Öffnung ist ein Staukonus in Form einer Haube angeordnet. Über den Boden bewegen sich die drehbar gelagerten Räumschaufeln und führen das Schüttgut vom planparallelen Boden zum zentrischen Auslauftrichter.

Die DE 1 940 714 B2 beschreibt eine Einrichtung mit einem Silo und mit einer Vorrichtung zum Austragen von Schüttgütern, wobei das Silo am unteren Ende einen Schutzsattel sowie eine unter diesem angeordnete, mit einer Austragsöffnung versehene Bodenplatte aufweist. Zwischen dem Schutzsattel und der Bodenplatte sind zwei Räumarme auf Drehzapfen gelagert. Unterhalb der Räumarme ist ein Auslauftrichter angeschlossen. Die Drehzapfen sind an den sich drehenden Auslauftrichter angeschlossen und die gegenüber den Drehachsen überstehenden rückseitigen Teile der Räumarme an ihren inneren Enden durch einen längs verstellbaren Zuganker miteinander verbunden. Damit ist es möglich, für die Räumarme unterschiedliche Schrägstellungen einzustellen.

Den bekannten Einrichtungen für das Aufnehmen von Schüttgut, die eine Schüttgutaufnahme und eine Austragsvorrichtung für Schüttgut haben, haftet der Nachteil an, dass hier eine Schüttgutaufnahme in einen Behälter, einen Silo, einen Bunker oder einen Reaktor mit einem gasförmigen Medium nicht in einem Gleich- oder Gegenstrom durchströmt werden kann, wenn die entsprechende Austragsvorrichtung in Betrieb ist. Aufgrund der Druckbelastung durch das gasförmige Medium würde das Schüttgut dabei nämlich in die Austragsöffnung gedrängt, so dass ein gewünschter gleichmäßiger Austragsstrom über die Räumzinken nicht möglich ist. Des Weiteren ist hier eine weitestgehende Vereinzelung des Schüttgutes bei dem Austragen nicht gewährleistet. Die Vereinzelung von Schüttgut ist aber insbesondere dann gewünscht, wenn das Schüttgut kugelförmig ist und/oder ein regelmäßig oder unregelmäßig geformtes, grobkörniges Schüttgut im Korngrößenbereich ≥ 5 mm ist.

DE924433 offenbart eine Einrichtung nach dem Oberbegriff des Anspruchs 1.

Ausgehend von diesem Stand der Technik liegt der Erfindung die Aufgabe zu Grunde, eine Einrichtung für das Aufnehmen von Schüttgut mit einer Schüttgutaufnahme und mit einer Austragsvorrichtung bereitzustellen, die während dem Austragen von Schüttgut ermöglicht, das Schüttgut mit gasfömigem Medium zu beaufschlagen und insbesondere das in der Schüttgutaufnahme aufgenommene Schüttgut mit gasförmigem Medium zu durchströmen. Insbesondere ist es eine Aufgabe der Erfindung, dass das Schüttgut bei dem Austragen aus der Schüttgutaufnahme vereinzelt wird.

Darüber hinaus ist es eine Aufgabe der Erfindung, eine Anlage für das Behandeln von gasförmigem Fluid bereitzustellen, insbesondere für das thermische und/oder katalytische Reinigen von schadstoffbelasteter Abluft, z.B. von Abluft, die siliziumorganische Verbindungen enthält, die über große Zeiträume hinweg kontinuierlich betrieben werden kann und bei der in einem Schüttgutbehälter aufgenommenes Schüttgut mit gasförmigem Fluid, insbesondere mit schadstoffbelasteter Abluft beaufschlagt wird.

Außerdem ist es eine Aufgabe der Erfindung, ein Verfahren zum Austragen von Schüttgut aus einer Schüttgutaufnahme bereitzustellen, bei dem das Schüttgut während dem Austragen mit gasförmigem Fluid beaufschlagt werden kann, und ein Verfahren für das Behandeln von gasförmigem Fluid zu schaffen, das sich über lange Zeiträume hinweg ohne Unterbrechungen ausführen lässt.

Diese Aufgabe wird mit der in Anspruch 1 angegebenen Einrichtung und dem Gegenstand der von diesem Anspruch abhängigen Ansprüchen gelöst.

Die in Anspruch 1 angegebene Einrichtung für das Aufnehmen von Schüttgut umfasst eine Schüttgutaufnahme und enthält eine Austragsvorrichtung. Die Schüttgutaufnahme hat hier einen Boden mit einer Austragsöffnung und weist eine Mantelwand auf. Die Austragsvorrichtung enthält wenigstens einen an einer Lagersäule um eine die Austragsöffnung durchstoßende Mittenachse drehbar gelagertes Räumorgan. In der Einrichtung gibt es vorzugsweise einen von der Mittenachse durchsetzen oberhalb des Bodens angeordneten Staukonus, der mit der Mantelwand und dem Boden einen Austragsspalt bildet. Die Austragsvorrichtung enthält auch einen Antrieb für da Räumorgan, mit dem das Räumorgan um die Mittenachse in einer Arbeitsdrehrichtung gedreht werden kann. An dem wenigstens einen Räumorgan ist zumindest eine Räumzinke befestigt, die bei einer Drehbewegung des Räumorgans um die Mittenachse in der Arbeitsdrehrichtung in das in der Schüttgutaufnahme aufgenommene Schüttgut eintaucht und das Schüttgut zu der Mittenachse drängt, wobei das Schüttgut durch die Austragsöffnung von dem Boden fällt.

Erfindungsgemäß hat die in Anspruch 1 angegebene Einrichtung einen Staukonus, der das Räumorgan übergreift. D.h., das Räumorgan der Einrichtung ist in dem Inneren des Staukonus angeordnet und auf diese Weise von dem in der Schüttgutaufnahme aufgenommenen Schüttgut abgeschirmt. Damit ist gewährleistet, dass das Räumorgan bei seiner Drehbewegung um die Mittenachse kein Schüttgut verdrängen muss. Das Schüttgut kann sich dann nicht vor dem Räumorgan aufbauen und die Drehbewegung behindern.

Bei der in Anspruch 2 angegebenen Einrichtung ist der Boden als ein zu der Austragsöffnung ansteigend verlaufender Diffuseurboden ausgebildet. Mit dieser Formgebung des Diffuseurbodens wird insbesondere erreicht, dass sich die Strömungsgeschwindigkeit des in der Schüttgutaufnahme zu der Austrittsöffnung bewegten Schüttguts verlangsamt. Mit der Formgebung des Diffuseurbodens wird auch erreicht, dass das Schüttgut bei entsprechendem Abtrag des sich am Austritt bildenden Böschungswinkels durch einen bewegten Garenzinken ohne Brückenbildung frei ausfließen kann.

Von Vorteil ist es, wenn der zu der Austragsöffnung ansteigend verlaufende Diffuseurboden einen Rundungsabschnitt und eine mit dem Winkel α zur zentralen Austragsöffnung hin ansteigenden Schrägfläche hat. Diese Rundung und der entsprechende ansteigende ebene Bereich des Diffuseurbodens bewirken, dass das Schüttgut durch den sich hierdurch einstellenden Böschungswinkel nicht frei, d.h. von selbst, sondern erst durch Abräumen mittels einer Räumzinke ausgetragen wird, d.h. frei ausfließen kann.

Das Räumorgan kann z.B. als ein Räumarm ausgebildet sein.

In einer besonders vorteilhaften und hinsichtlich der Aufgabe wirkungsvollen Ausgestaltung der Erfindung ist die Räumzinke eine Garenzinke oder ein Räumrechen.

Die Garenzinke taucht hier nicht (ähnlich wie eine Sichel) radial in das Schüttgut ein, sondern sie taucht von oben in die Schüttung ein und verdrängt lediglich einen kleinen Teil des Schüttgutes, der aber ausreicht, um einzelne Partikel/Kugeln über den Rand des Bodens, insbesondere des Diffuseurbodens zu schieben. Die geschwungene Form der Garenzinke dient im Wesentlichen dazu, dass sich das Schüttgut nicht vor dem Räumarm aufbauen und zu einem erhöhten Widerstand führen, sondern ausweichen kann. Eine Bevorzugte Eigenschaft der Garenzinke ist dabei, dass der eintauchende Bereich aufgrund der Ausgestaltung der Räumzinke in seitlicher Richtung und nach oben ausweichen kann, um ein "Festfahren" der Räumeinrichtung im Schüttgut zu vermeiden. Geeignete Zinkenformen sind demnach alle, die dieses Ausweichen in diese beiden Richtungen ermöglichen, z.B. auch durch ein Federsystem, welche hiermit auch unter dem Begriff "Garenzinke" mitverstanden werden sollen.

Ein Räumrechen weist dabei vorzugsweise eine Mehrzahl an Rechenzinken auf. Die Rechenzinken sind dabei im Wesentlichen parallel zu einander beanstandet und an einem Rechenarm oder direkt an dem Räumarm angeordnet. Je nach Art des Schüttguts sind die Rechenzinken gerade oder geschwungen und/oder in Drehrichtung oder gegen die Drehrichtung geneigt ausgebildet. Auch kann es vorteilhaft sein, dass die Rechenzinken zu ihrem vom Räumarm entfernten Ende hin profiliert, insbesondere spitzzulaufend ausgebildet sind. Die Breite der Rechenzinken ist dabei vorzugsweise geringer als die Dimensionen Dim einzelner Schüttgutkörner. Der Abstand zwischen benachbarten Rechenzinken wiederum ist vorzugsweise von ähnlichen, insbesondere größeren Abmessungen wie die Dimensionen Dim einzelner Schüttgutkörner. Vorteilhafterweise beträgt zur Vermeidung einer Brückenbildung zwischen benachbarten Rechenzinken und/oder eines Aufstauens von Schüttgutkörnern vor einer Rechenzinke ein Abstand von mindestens dem Fünffachen, insbesondere mindestens dem Zehnfachen der Dimension Dim der Schüttgutkörner, insbesondere der größten Schüttgutkörner in der Schüttung. Die Rechenzinken tauchen wie die Garenzinke von oben in die Schüttung ein und verdrängen einen kleinen Teil des Schüttguts über den Rand des Bodens. Durch die Dimensionierung der Rechenzinken und ihrer Abstände kann ein Aufbauen des Schüttguts vor dem Räumarm wirkungsvoll verhindert werden.

In einer vorteilhaften Weiterbildung weist die Räumzinke an ihrem in das Schüttgut greifenden Ende einen Räumkörper auf. Unter einem Räumkörper wird dabei insbesondere ein Strukturelement wie eine Spitze, ein Keil, ein Spatenblatt, eine pflugähnlich Schaufel oder dergleichen verstanden, welches dazu vorgesehen ist, die Vereinzelung des granularen Schüttgutes in der Drehrichtung zu begünstigen. Vorzugsweise ist der Räumkörper dabei in seinen Abmessungen, Anstellwinkeln, Oberflächenformen und/oder Kantenausbildungen an das jeweilig auszutragende Schüttgut angepasst. Dabei kann es eine vorteilhafte Weiterbildung sein, wenn der Räumkörper wechselbar an der Räumzinke befestigt ist, so dass bei Verwendung eines anderen Schüttguts der dazu passende Räumkörper an der Räumzinke vorgesehen werden kann.

In einer besonders einfachen Ausbildung der erfindungsgemäßen Einrichtung ist an der Austragsöffnung ein Schrägboden mit Seitenwänden angeordnet, der in eine Austragsrinne oder in ein Austragsrohr mündet. Der Schrägboden erlaubt dabei eine einfache Abfuhr und Bereitstellung des ausgetragenen Schüttguts für nachfolgende, hier nicht näher beschriebene Prozesse.

Die Einrichtung kann ein eigenständiges Gehäuse aufweisen, das im Wesentlichen trichterförmig ausgebildet ist und somit unter ein Silo, einen Bunker oder einen Reaktor gefahren werden kann, der an der Unterseite Auslauföffnungen für das Schüttgut aufweist. Das Schüttgut tritt bei dieser Ausführung in den Behälter der Austragsvorrichtung ein und wird in gewünschter Weise über die rotierenden Räumarme mit den daran befestigten Räumzinken über die schräg ansteigende untere Bodenwand über den Rand ausgetragen, wodurch das Schüttgut durch die hochstehenden Kanten zurückgehalten wird und nur das mit dem Austragszinken in Berührung kommende Schüttgut in gewünschter Weise ausgetragen wird. Hierüber erfolgt gewissermaßen eine gezielte Vereinzelung, so dass der Austrag des Schüttgutes selbst durch die Form der Zinken, die Form des Diffuseurbodens und die Korngrößen sowie die Drehgeschwindigkeit des Räumarmes im Wesentlichen bestimmt ist.

Die Formgebung des Diffuseurbodens hat zudem den Vorteil, dass dieser zusammenwirkend mit einem Staukonus verhindert, dass bei Einbringung gasförmiger Medien in das Schüttgut dieses durch die Austragsöffnung hindurchgedrückt werden kann. Die ansteigenden Innenflanken des Bodens verhindern dies zusammenwirkend mit der unteren Kante des Staukonus. Die Kante des Staukonus ist im Durchmesser so bemessen, dass sich in Verbindung mit der entsprechenden Mantelfläche des Außenkonus ein Massenfluss des Schüttgutes ergibt. Der innere Staukonus und die äußere Gehäusemantelwand können auch aus einem Lochblech bestehen, um eine Gasdurchlässigkeit zu erreichen. Die Formgebung des Diffuseurbodens hat außerdem den Vorteil, dass der Ausfluss des Schüttgutes nur bei laufender Räumeinrichtung und ohne Brückenbildung gegeben ist.

Die Einrichtung kann aber auch als Bestandteil des Silos ausgelegt sein, d. h. der vorzugsweise trichterförmige Behälter der Schüttgutaufnahme kann angeformt sein. Der Staukonus kann in die Schüttgutaufnahme dann eingesetzt sein. Für den darin verlaufenden Räumarm mit der Räumzinke gilt entsprechendes. Die Einrichtung kann auch transportal sein. Dann kann sie in Verbindung mit verschiedenen Behältern und Silos eingesetzt, d.h. verwendet werden. Des Weiteren ist durch Einbringung eines anderen Staukonus oder durch Einbringen eines anderen Diffuseurbodens mit höherer Steigung und unterschiedlichen Abständen zum unteren Rand des Staukonus auf einfache Weise eine Anpassung an das jeweilige Schüttgut möglich. Für die einwandfreie Funktion der Austragsvorrichtung ist es erforderlich, dass die geometrischen Verhältnisse, nämlich der Wandwinkel und der Radius des Diffuseurbodens, der Räumarm und die Leitbleche sowie Räumzinken auf das auszutragende Schüttgut abgestimmt werden. Unter Berücksichtigung dessen wird eine Brückenbildung des Schüttgutes in der Austragsvorrichtung oder ein Durchfließen verhindert.

Abhängig vom Wandreibungswinkel und dem Böschungswinkel des Schüttgutes werden der Wandwinkel und der durch den Diffuseurboden definierte freie Austrittsquerschnitt so gewählt, dass das Schüttgut gerade nicht frei ausfließen kann. Stattdessen erfolgt der Austrag mit den Räumzinken, die das Schüttgut über die Kante der Austrittsöffnung transportieren, so dass das Schüttgut in den darunter befindlichen Behälter, vorzugsweise einen solchen mit einem Schrägboden, einfallen und in eine Entnahmerinne oder über ein angeschlossenes Rohr abgeführt werden kann.

Durch die Verwendung von Garenzinken, wie sie in der Landwirtschaft zum Durchmischen von Sandböden bekannt sind, erfolgt eine Mischung des Schüttgutes bei gleichzeitiger Verteilung längs des eintauchenden Abschnittes, so dass das Schüttgut praktisch einzeln mittels des Garenzinkens über die Kante der Austrittöffnung geschoben wird. Der Diffuseurboden verlangsamt den Austritt und lässt nur ein Herausfallen des hintergriffenen Schüttgutes zu. Die Garenzinken bestehen aus Federstahl und weisen jeweils einen in das Schüttgut sichelförmig in Drehrichtung eintauchenden Abschnitt auf, der als eine Verlängerung eines bogenförmigen, sich hochstehend in den Innenraum des Staukonus erstreckenden Federmetallteils dient, das an dem Räumarm und dieser an der aus der Lagersäule vorstehenden Antriebswelle befestigt ist. Solche Garenzinken können paarweise am Räumarm vorgesehen sein, wobei die Garenzinken radial und höhenversetzt an dem Räumarm befestigt sein können. Das Ende der äußeren Garenzinken endet vor dem Rundungsteil des Diffuseurbodens, während die Enden der inneren Garenzinken oberhalb der Schrägflächen des Diffuseurbodens enden. Der Abschnitt selbst sollte so verlaufend ausgebildet sein, dass er von oben mit einem kleinen Bogenteil in die Schüttung eintaucht, um den Widerstand beim Ausräumen gering zu halten. Bei Drehung des Räumarms wird dann ein kugelförmiges Schüttgut, z. B. Kugeln, über die schräg verlaufenden Ausräumflächen der Räumzinken ausgetragen. Durch die Form des Zinkens wird u. a. ein Ausweichen des Zinkens bei einem Schüttgutstau, z. B. einem Kugelstau, ermöglicht. Die Ausführung der Garenzinken verhindert das Blockieren und ein Abheben des Räumarmes und damit eine Unterbrechung des Austrags.

Um eine Anpassung an Schüttgut unterschiedlicher Korngrößen auf einfache Weise zu ermöglichen, kann der Staukonus höhenverstellbar in der Austragsvorrichtung oder im Schüttgutbehälter angeordnet sein. Wenn die Austragsvorrichtung ein eigenständiges Gehäuse aufweist und unter ein Silo fahrbar ausgelegt ist, kann eine obenseitige Traverse vorgesehen sein, an der eine Zugvorrichtung, z. B. ein Motor mit einer Spindel, angebracht sein kann, um den Staukonus in der Höhe gegenüber dem Diffuseurboden verstellen zu können.

Die Mantelwand bzw. der Aufnahmetrichter der Austragsvorrichtung oder des Schüttgutbehälters ist vorteilhafterweise konisch nach unten verjüngend zulaufend ausgebildet und geht bogenförmig in den Diffuseurboden über, der vorzugsweise im Wesentlichen nach innen zur Austragsöffnung eine ansteigende Schrägfläche aufweist.

Um einen kontinuierlichen Austrag zu erreichen, können auch mehrere Garenzinken und/oder Räumarme auf einer Umlaufbahn verteilt angeordnet sein, z. B. um 180° versetzt zwei solcher Anordnungen oder um 120° versetzt drei solcher Anordnungen, die an der Welle befestigt sind.

Das über die Austragsöffnung ausgegebene Schüttgut kann vorteilhaft in einen darunter befindlichen Behälter mit Schrägboden aufgesammelt und dann über eine Austragsrinne oder ein Austragsrohr entnommen werden. Mit dem Austragsrohr kann beispielsweise ein Schüttgutförderer verbunden sein, über den das ausgetragene Schüttgut zur Weiterverarbeitung an andere Behälter oder Maschinen geleitet wird. Es kann aber auch, wenn ein Umlauf erforderlich ist, das Schüttgut wieder in den Behälter obenseitig eingebracht werden. Es kann jedoch auch vorgesehen sein, dass das über die Austragsöffnung ausgegebene Schüttgut direkt in einem Sammel- oder Förderbehälter aufgefangen wird. Der Sammel- oder Förderbehälter ist dabei vorzugsweise verfahrbar, selbstfahrend und anderweitig austauschbar unter der Austragsöffnung angeordnet.

Auf Grund der Geometrie der Räumarme und der Abstände zum Diffuseurboden kann ein Verklemmen des Schüttgutes verhindert werden. Die Räumarme sind radial an einer vertikalen Welle angebracht. Die Welle wird von einem im Unterbau befestigten Elektromotor über ein Getriebe angetrieben.

In einem weiteren Aspekt betrifft die Erfindung eine Verwendung nach Anspruch 14 der erfindungsgemäßen Einrichtung in einer Abluftreinigungsanlage, insbesondere in einer thermischen und/oder katalytischen Abluftreinungsvorrichtung. Dies ist insbesondere dann von Vorteil, wenn für die Reinigung einer mit Schadstoffen belasteten Abluft ein als Schüttung vorliegender oder zu einer Schüttung verarbeitbares Wärmespeichermedium und/oder Reaktionspartner und/oder Katalysatormaterial zum Einsatz kommt. Die Austragsvorrichtung in einer erfindungsgemäßen Einrichtung erlaubt dabei den Durchsatz an Abluft über weite Zeiträume konstant zu halten, da bei laufendem Betrieb mittels Aktivierung der Austragsvorrichtung verbrauchte und/oder durch Verschmutzung unbrauchbar gewordene Schüttung aus dem Schüttgutbehälter entfernt werden kann, ohne dass der Schüttgutaustrag durch den Abluftstrom bzw. umgekehrt beeinträchtigt würde. Von besonderem Vorteil ist die Verwendung der erfindungsgemäßen Austragsvorrichtung zur Reinigung von Ablüften, welche bei Umsetzung der Schadstoffe zu starker Ablagerungsbildung neigen, wie dies beispielsweise bei siliziumorganischen Verbindungen in der Abluft der Fall ist.

In einem weiteren Aspekt wird ein Verfahren zum Austrag eines Schüttguts aus einem Schüttgutbehälter offenbart, umfassend die Anordnung einer Austragsvorrichtung mit einem eine Austragsöffnung aufweisenden Aufnahmetrichter, einem im Aufnahmetrichter angeordneten, insbesondere koaxial zu einer Mittenachse des Aufnahmetrichters angeordneten Staukörper, vorzugsweise Staukonus, und zumindest einem unterhalb des Staukörpers angeordneten, drehend um die Mittenachse antreibbares, vorzugsweise als ein Räumarm ausgebildetes Räumorgan mit mindestens einer Räumzinke unterhalb des Schüttgutbehälters, wobei das Verfahren folgende Schritte umfasst:
- Eintreten des Schüttguts in die vorzugsweise als Aufnahmetrichter ausgebildete Schüttgutaufnahme, wobei das Schüttgut vom Staukörper in Richtung einer Außenwand der Schüttgutaufnahme abgelenkt wird und den Staukörper teilweise umströmt, wobei die Schüttgutaufnahme derart mit Schüttgut aufgefüllt wird, dass sich unterhalb des Staukörpers in Richtung auf die Austrittsöffnung eine Staulinie der Stauhöhe h des auszutragenden Schüttguts ausbildet, wobei die Räumzinke im Wesentlichen in axialer Richtung entlang der Mittenachse von oben durch die Staulinie in das auszutragende Schüttgut eingreift; insbesondere bildet die Staulinie dabei keine einheitliche Höhe h, sondern die Höhe h nimmt in Richtung des Austrages mit dem dem jeweiligen Schüttgut entsprechenden Böschungswinkel ab;
- Inbetriebnahme des Drehantriebs des Räumarms in Arbeitsrichtung;
- Partielles Verdrängen und Vereinzeln des in Drehrichtung vor der mindestens eine Räumzinke liegenden, aufgestauten Schüttguts in Richtung auf die Austragsöffnung in der Schüttgutaufnahme;
- Austritt des so verdrängten und vereinzelten Schüttguts durch die Austrittsöffnung und im Wesentlichen gleichzeitiges Nachrutschen des in der Schüttgutaufnahme befindlichen Schüttguts bis Wiedererreichen der Stauhöhe h unterhalb des Staukörpers;
- Wiederholung der Schritte Verdrängen und Vereinzeln, Austritt und Nachrutschen solange der Drehantrieb des Räumarms aktiv ist;
- Versiegen des Austritts von Schüttgut und Nachrutschen des im Aufnahmetrichter befindlichen Schüttguts bis Wiedererreichen der Stauhöhe h unterhalb des Staukörpers nach Deaktivierung des Drehantriebs.

Zum Eintreten des Schüttguts in den Aufnahmetrichter wird die Schüttgutaufnahme günstigerweise an einer vorzugsweise in einer unteren Endfläche des Schüttgutbehälters angeordneten Verbindungsstelle mit Verbindungsöffnung angeordnet, insbesondere dort mit dem Schüttgutbehälter verbunden. Die Verbindungsöffnung kann dabei bevorzugt im Wesentlichen die gesamte untere Endfläche des Schüttgutbehälters überdecken, wodurch für das Schüttgut nahezu der volle Querschnitt des Aufnahmetrichters für den Eintritt in die Austragsvorrichtung genutzt werden kann.

Der Staukörper verengt zusätzlich zur trichterförmigen Verjüngung des Aufnahmetrichters einen Querschnitt entlang der Mittenachse für den Durchtritt des Schüttguts durch den Aufnahmetrichter sowie eine Durchtrittfläche zwischen Boden des Aufnahmetrichters und einem bodenzugewandten Rand des Staukörpers. Dabei bildet das Schüttgut unterhalb des Staukörpers eine Staulinie mit einer vorzugsweise durch den Böschungswinkel vorgegebenen Stauhöhe h aus. Bevorzugte Staukörper sind dabei konisch in Richtung des Bodens verbreiternd und besonders bevorzugt innen im Wesentlichen hohl ausgebildet.

Dadurch dass die Räumzinke im Wesentlichen in axialer Richtung entlang der Mittenachse von oben durch die Staulinie in das auszutragende Schüttgut eingreift, wird ein Aufbauen des Schüttguts vor dem Räumarm wirkungsvoll verhindert und es kommt zu keinem erhöhten Widerstand bezüglich der Drehbewegung des Räumarms. Der Austritt des Schüttguts kann somit vorteilhaft gleichmäßig erfolgen.

In einer Weiterbildung des Verfahrens ist vorgesehen, dass das auszutragende Schüttgut im Aufnahmetrichter radial außen vom Staukörper eine gedachte Stauhöhe hₘₐₓ einnimmt, während die Stauhöhe h des auszutragenden Schüttguts unterhalb des Staukörpers in radialer Richtung auf die Austrittsöffnung zu, insbesondere innerhalb einer von der Räumzinke umfahrbaren Innenkreisfläche, auf eine minimale Stauhöhe hₘᵢₙ abnimmt. Dadurch wird der durch die Räumzinke und den Staukörper erzielte Vereinzelungseffekt der Schüttgutkörner vorteilhaft begünstigt. In einer bevorzugten Ausprägung wird hₘᵢₙ erst an der Kante der Austrittsöffnung erreicht. Es kann jedoch auch vorteilhaft sein, wenn hₘᵢₙ bereits mit radialem Abstand von der Kante der der Austrittsöffnung erreicht wird.

In anderen, ggf. ergänzenden Weiterbildungen des Verfahrens ist vorgesehen, dass entgegen einer Austrittsrichtung des Schüttguts aus der Austrittsöffnung durch diese Austrittsöffnung und/oder einen zumindest teilweise bzw. abschnittsweise, insbesondere im Bereich der Austrittsöffnung, durchlässig, insbesondere gasdurchlässig, ausgebildeten Boden, ein Fluidstrom, insbesondere ein Gasstrom, vorzugsweise eine Abluft- oder Abgasströmung, durch das Schüttgut in eine als Aufnahmetrichter ausgebildete Schüttgutaufnahme und von dort aus durch das Schüttgut in einen Schüttgutbehälter hindurchtritt, wobei es mit dem Schüttgut in Wechselwirkung tritt. Mit dieser Weiterbildung ist es beispielsweise möglich, das Schüttgut über einen Warm- oder Heißluftstrom, insbesondere trockenen Warm- oder Heißluftstrom zu trocknen. Auch kann über einen geeigneten Fluidstrom eine Vorbereitung, insbesondere eine Aktivierung des Schüttguts für eine dem Austritt an der Auftrittsöffnung nachgelagerten Be- und/oder Verarbeitungsprozess, erfolgen. Auch kann in umgekehrter Anwendung das Gas selbst durch die Wechselwirkung mit dem Schüttgut einer Aufbereitung oder Umsetzung unterzogen werden. Insbesondere kann ein mit Schadstoffen belasteter Abluft- oder Abgasstrom mit dem Schüttgut einem Abreinigungsprozess unterzogen werden, wodurch vorzugsweis ein Reingas entsteht.

In Weiterentwicklung des vorhergehend beschriebenen Verfahrens ist es vorgesehen, dass das entstandene Reingas bzw. der durch Wechselwirkung mit dem Schüttgut gereinigte Abluft- oder Abgasstrom über eine oberhalb des Aufnahmetrichters im Schüttgutbehälter vorgesehene Abluftöffnung abgeführt, insbesondere abgesaugt wird.

In einer besonders bevorzugten Ausprägung des Verfahrens ist vorgesehen, dass der Fluidstrom ein mit Schadstoffen, insbesondere gasförmigen, flüssigen und/oder partikularen Schadstoffen, belasteter Abluft- oder Abgasstrom ist, und dass der Fluidstrom mit dem Schüttgut derart wechselwirkt, dass ein oder mehrere in dem Abluft- oder Abgasstrom mitgeführte oder diesen belastenden Schadstoffe zu unschädlichen Stoffen, insbesondere umweltverträglichen Stoffen, vorzugsweise Reingas umgesetzt werden.

In einem weiteren Aspekt wird eine Abluftreinigungsvorrichtung zur thermischen und/oder katalytischen Reinigung von schadstoffbelasteter Abluft, insbesondere siliziumorganische Verbindungen enthaltender Abluft offenbart. Unter einem Schadstoff wird dabei insbesondere ein Stoff verstanden, welcher umwelt-, gesundheitsgefährdend und/oder für nachfolgende Verarbeitungsprozesse schädlich wirken kann. Die Schadstoffe können dabei zumindest Schadgas, Schaddampf, Schadfluid, eine Schadflüssigkeit und/oder von der Abluft mitgeführte Schadpartikel umfassen.

Die Abluftreinigungsvorrichtung umfasst dabei einen, ein filternd und/oder katalytisch auf die Abluft, insbesondere auf zumindest einen Teil der in der Abluft enthaltenen Schadstoffe wirkendes Schüttgut beherbergenden Behälter und eine erfindungsgemäße Austragsvorrichtung zum Austrag des Schüttguts aus einer Austragsöffnung, wobei zumindest ein Teil der zur reinigenden Abluft durch die Auftragsöffnung in den Behälter eintritt.

Alternativ oder ergänzend kann auch zumindest ein Abschnitt des Bodens für die schadstoffbelastete Abluft derart durchlässig sein, so dass die schadstoffbelastete Abluft über diesen Abschnitt in den Behälter eintreten kann. Vorzugswiese ist der Abschnitt dabei jedoch schüttgutdicht ausgebildet, so dass das auszutragende Schüttgut nur über die Austrittsöffnung austreten kann.

Auch kann zusätzlich oder alternativ vorgesehen sein, dass zumindest ein Abschnitt des Aufnahmetrichters, der Mantelwand des Schüttgutbehälters, des Schüttgutbehälters und/oder der Gehäusemantelwand für die schadstoffbelastete Abluft derart durchlässig ist, so dass die schadstoffbelastete Abluft über diesen Abschnitt in den Behälter eintreten kann. Vorzugswiese ist der Abschnitt dabei jedoch schüttgutdicht ausgebildet, so dass das auszutragende Schüttgut nur über die Austrittsöffnung austreten kann.

In einem weiteren Aspekt wird ein Verfahren zur thermischen und/oder katalytischen Reinigung einer schadstoffbelasteten Abluft offenbart, insbesondere einer siliziumorganische Verbindungen enthaltenden Abluft, in einer Abluftreinigungsvorrichtung nach der vorstehend beschriebenen Art, wobei zumindest ein Teil der Abluft über die Austragsvorrichtung entgegen der Austragsrichtung des Schüttguts in den Behälter eingebracht und das als Wärmespeichermasse und/oder Katalysator wirkende Schüttgut entgegen der Austragsrichtung durchströmt wird, wobei es zu Reingas umgesetzt wird.

In einer alternativen Ausprägung des Verfahrens zur thermischen und/oder katalytischen Reinigung einer schadstoffbelasteten Abluft, insbesondere einer siliziumorganische Verbindungen enthaltenden Abluft, in einer eine Austragsvorrichtung nach der im Vorhergehenden beschriebenen Art umfassenden Abluftreinigungsvorrichtung wird die Abluft mittels einer Wärmespeichermasse regenerativ vorgewärmt und/oder mit Hilfe einer Katalysatormasse umgesetzt, wobei mindestens ein Teil der Wärmespeicher- und/oder Katalysatormasse eine Schüttung ist. Erfindungsgemäß kann zum Entnehmen, Reinigen und Einbringen der Schüttung, insbesondere zum Entfernen der durch die Oxidation der siliziumorganischen Verbindungen gebildeten Anhaftungen die verbrauchte Schüttung über die Austragsvorrichtung aus einem Schüttgut-Behälter der Abluftreinigungsvorrichtung entnommen werden.

Im Folgenden wird die Erfindung anhand der in der Zeichnung in schematischer Weise dargestellten Ausführungsbeispiele näher erläutert.

Es zeigen:
- Fig. 1: eine erste Einrichtung für das Aufnehmen von Schüttgut, mit einer Schüttgutaufnahme und mit einer Austragsvorrichtung;
- Fig. 2: einen Räumarm mit Garenzinken;
- Fig. 3a: und Fig. 3b einen Räumarm mit einer alternativen Ausgestaltung einer Garenzinke;
- Fig. 4a: Fig. 4b und Fig. 4c einen Räumarm mit einem Räumrechen und mit unterschiedlichen Räumzinken;
- Fig. 5: eine zweite Einrichtung für das Aufnehmen von Schüttgut, mit einer Schüttgutaufnahme, mit einer Austragsvorrichtung und mit einem Anschluss für das zuführen von gasförmigem Fluid;
- Fig. 6: zwei weitere Einrichtungen für das Aufnehmen von Schüttgut, mit einer Schüttgutaufnahme und mit einer Austragsvorrichtung;
- Fig. 7: zwei weitere Einrichtungen für das Aufnehmen von Schüttgut, mit einer Schüttgutaufnahme, mit einer Austragsvorrichtung und mit einem in einem Staukonus angeordneten Drehantrieb für einen Räumarm;
- Fig. 8: zwei weitere Einrichtungen für das Aufnehmen von Schüttgut, mit einer Schüttgutaufnahme, mit einer Austragsvorrichtung und mit einem Drehantrieb für einen Räumarm, der eine durch eine Schüttgutaufnahme in einem Schüttgutbehälter greifende Welle umfasst;
- Fig. 9: eine weitere Einrichtung für das Aufnehmen von Schüttgut, mit einer mit einer Ummantelung versehenen trichterförmigen Schüttgutaufnahme; sowie
- Fig. 10: ein Flussdiagramm zu einem erfindungsgemäßen Verfahrens für das thermische und/oder katalytische Reinigen von Abluft.

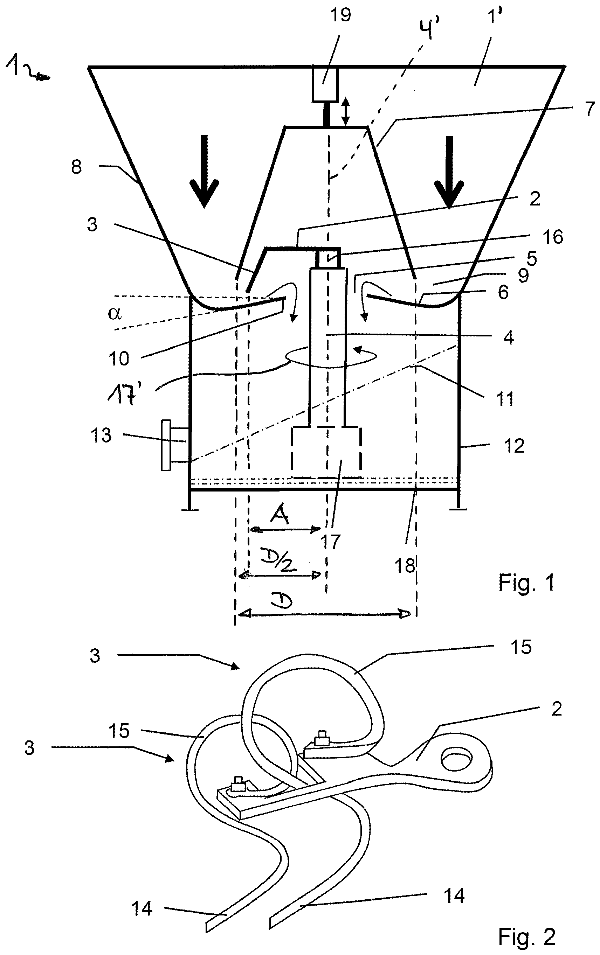

Die in der Fig. 1 gezeigte Einrichtung 1 kann das Unterteil eines Schüttgutbehälters sein oder auch eine Austragsvorrichtung mit einem Gehäuse, das unter einen Schüttgutbehälter fahrbar ist.

Die Einrichtung für das Aufnehmen von Schüttgut weist eine Mantelwand 8 auf, die nach unten konisch zulaufend ausgebildet ist. Dadurch wird das in eine Schüttgutaufnahme 1' eingegebene Schüttgut beim Nachlaufen bzw. Nachrutschen zur Mitte hin gefördert. Die dargestellten, nach unten gerichteten Pfeile geben die Bewegungsrichtung des Schüttgutes an. Obenseitig ist eine nicht dargestellte Traverse angeordnet. An dieser Traverse befindet sich gemäß Fig. 1 eine Hebevorrichtung 19, mittels der ein in die Schüttgutaufnahme 1 eingesetzter Staukonus 7 in der Höhe gegenüber dem Boden 6 verstellbar ist. Der Boden ist gemäß der Erfindung als Diffuseurboden 6 ausgebildet. Er weist insbesondere seitlich eine bogenförmige Anbindung an die Mantelwand 8 auf, die in einem schräg nach oben verlaufenden Bodenabschnitt übergeht, der im Winkel α angeordnet ist. Der Winkel α kann beispielsweise 10° betragen und ist abhängig vom Schüttgut ausgelegt. Das Schüttgut selbst gelangt über die innenliegende, ringförmige Kante 10 der Austragsöffnung 5 in den darunter befindlichen Behälter mit den Seitenwänden 12. Dieser Behälter und auch die darüber befindliche Schüttgutaufnahme 1 können rund oder eckig im Querschnitt ausgeführt sein. Der Behälter des Ausführungsbeispiels nach Fig. 1 weist ferner einen Schrägboden 11 auf, so dass das Schüttgut über den Schrägboden 11 in Richtung des Austragsrohres 13 durch die Schwerkraft sich bewegen kann. Alternativ oder ergänzend kann auch eine Fördervorrichtung wie ein Förderband oder ein Abzug zum Abtransport des ausgetragenen Schüttguts vorgesehen sein.

Die Kante des als Staukörper wirkenden Staukonus 7 ist im Durchmesser so bemessen, dass sich in Verbindung mit der entsprechenden Mantelfläche des Außenkonus 8 ein Massenfluss des Schüttgutes ergibt. Der Staukonus 7 und/oder die äußere Mantelfläche des Außenkonus 8 können auch aus Lochblech bestehen, um eine Gasdurchlässigkeit zu erreichen.

Das Austragsrohr 13 ist mit einem Stutzen versehen, um eine Verbindung mit einem Anschlussrohr herstellen zu können, um beispielsweise das Schüttgut einer Maschine zuführen zu können, die dieses weiter verarbeitet. An dem Boden 18 des Behälters ist ein Motor mit einem Getriebe und einer Lagersäule 4 befestigt. Durch die Lagersäule 4 ist eine Antriebswelle 16 hindurchgeführt, an deren oberen Ende mindestens ein als Räumarm 2 ausgebildetes Räumorgan befestigt ist, der eine Räumzinke 3, nämlich eine Garenzinke trägt. Der Staukonus 7 übergreift den Räumarm 2. Die Räumzinke 3 taucht innerhalb des Staukonus 7 in das Schüttgut ein und endet vor dem schräg nach oben gerichteten Diffuseurboden 6. Die Räumzinke bzw. Garenzinke 3 wird bei einem Drehen der Antriebswelle 16 in der Arbeitsrichtung 17' auf einer kreisförmigen Umlaufbahn um die Mittenachse 4' bewegt. Der Abstand A des von der Mittenachse 4 abgewandten bodenseitigen Endes der Räumzinke ist dabei kleiner als der halbe Durchmesser der zu der Austragsöffnung 5 weisenden Öffnung des Staukonus 7. Das Schüttgut selbst durchdringt den Austragsspalt 9 beim Austrag mittels des Garenzinkens 3 und rutscht in diesen Bereich nach, so dass es mit den Garenzinken verdrängt und über die Kante 10 der Austragsöffnung in den sich darunter befindlichen Behälter abgeführt werden kann. Es ist ersichtlich, dass durch die Bodenausbildung sichergestellt ist, dass nur die von dem Garenzinken 3 verdrängten Schüttgüter ausgetragen werden.

Die Fig. 2 zeigt eine Ausbildung der Garenzinken 3. Diese können an einem Räumarm 2 in der Höhenlage und radial ebenfalls versetzt angeordnet sein. Sie weisen untere Abschnitte 14 auf, die in das Schüttgut eintauchen. Die Abschnitte 14 gehen in die federnden Metallteile 15 über, die mittels Schrauben an dem Räumarm 2 befestigt sind. Die Steigung der Abschnitte 14 und ihrer Anordnung ist so vorgesehen, dass definierte Mengen von Schüttgut bei einer Umdrehung der Antriebswelle 16 und der damit verbundenen Drehbewegung des Räumarms 2 in einer Arbeitsdrehrichtung 17' um die Mittenachse 4' der Schüttgutaufnahme 1' ausgetragen werden. Durch die Bodenform und die Anbringung des Staukonus 7 ist ein definierter Austragsspalt 9 gegeben. Dieser verhindert, dass beispielsweise eingeblasenes Gas zum Trocknen des Schüttgutes ein Verdrängen des Schüttgutes über die Kante der Austragsöffnung 5 bewirkt, und sorgt dafür, dass der Austrag nur über den rotierenden Räumarm 2 mit dem daran befindlichen Räumzinken 3 erfolgt.

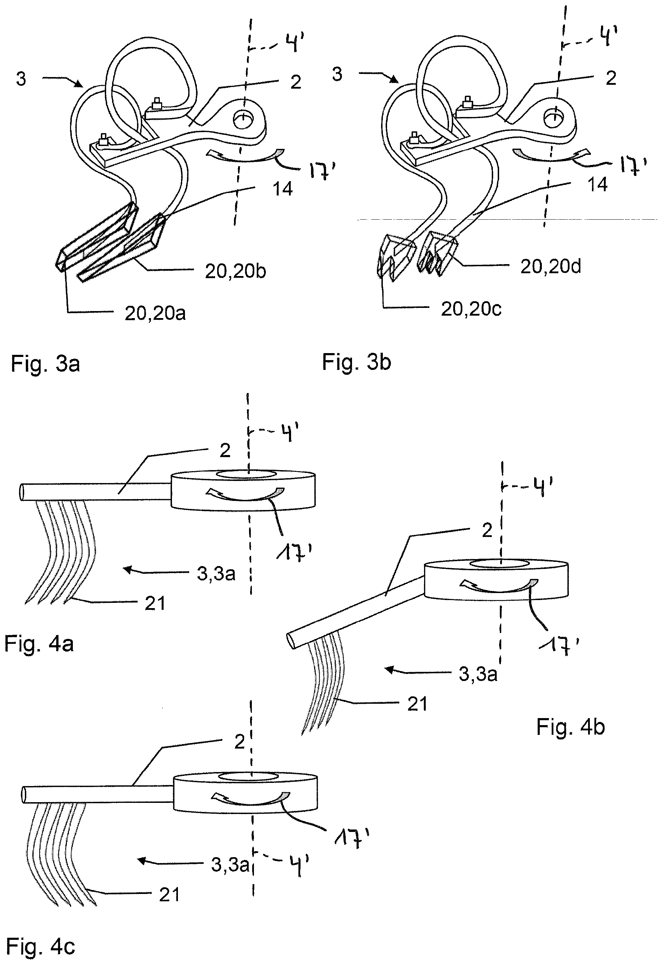

Die Fig. 3a und die Fig. 3b zeigen weitere unterschiedliche Ausgestaltungen von Garenzinken 3, wobei an den in das Schüttgut eintauchenden Abschnitten 14 jeweils ein Räumkörper 20 angeordnet ist. Der Räumkörper 20 ist dabei vorzugsweise in Bezug auf die Arbeitsdrehrichtung 17', welche durch den Richtungspfeil im Räumarm 20 angedeutet ist, vor dem jeweiligen Abschnitt 14 angeordnet. Es kann jedoch auch vorteilhaft sein, wenn der Räumkörper 20 abweichend als Schleppkörper ausgebildet und in Bezug auf die Arbeitsdrehrichtung 17' hinter dem jeweiligen Abschnitt 14 liegend positioniert ist. Der Räumkörper 20 ist dabei bevorzugt fest mit dem jeweiligen Abschnitt 14 verbunden, besonders bevorzugt einteilig mit diesem ausgebildet bzw. an diesen angeformt. Ist der Räumkörper 20 dagegen wechselbar, fest mit dem jeweiligen Abschnitt 14 verbindbar, so können abgenutzte Räumkörper 20 leicht ausgetauscht und/oder an das jeweilige Schüttgut besonders angepasste Räumkörper 20 zum Schüttgut passend ausgewechselt werden.

Die Fig. 3a zeigt dabei beispielhaft zwei unterschiedliche, besonders einfache Ausgestaltungen von Räumkörpern 20. Der Räumkörper 20a ist dabei als im Wesentlichen ebenes, trapezförmiges Spatenblatt ausgebildet, während der Räumkörper 20b eine im Wesentlichen ebene, dreieckige Blattform aufweist. Neben den hier konkret gezeigten einfachen Blattgeometrien können auch andere Polygonformen und/oder abgerundete Ecken und/oder Kanten für die Blattform eines Räumkörpers 20 von Vorteil sein. Auch kann es vorteilhaft sein, wenn die Räumkörper nicht eben, sondern um den jeweiligen Abschnitt 14 um einen bestimmten Winkel gefaltet oder gewölbt sind. Auch kann eine Krümmung zu einer Erstreckungsrichtung des jeweiligen Abschnitts 14 vorgesehen sein.

Die Fig. 3b zeigt beispielhaft zwei weitere Ausgestaltungen eines im Wesentlichen ebenen Räumkörpers 20. Dabei ist der Räumkörper 20c als eine doppelte Dachform mit im Wesentlichen scharfkantigen Übergängen ausgebildet, während der Räumkörper 20d eine dreifache Dachform mit abgerundeten Ecken aufweist. Analog wie bei den Ausführungen zu den Beispielen der Fig. 3a können auch im Falle der Räumkörper 20a, 20b der Fig. 3b entsprechende Modifikationen in Eck-, Kanten und/oder Flächenverlauf vorteilhafte Ausführungen eines Räumkörpers 20 ergeben.

Darüber hinaus können auch Räumkörper 20 mit dreidimensionalen Flächenmerkmalen, wie beispielsweise Prismen, Pyramiden, Kegeln, Sattelflächen und dergleichen für den Austrag bestimmter Arten von Schüttgut von Vorteil sein.

Die Fig. 4a, die Fig. 4b und die Fig. 4c zeigen ein als Räumarm 2 ausgebildetes Räumorgan für den Einsatz in der erfindungsgemäßen Einrichtung, das anstelle der vorstehend anhand der Fig. 2, der Fig. 3a und der Fig. 3b beschriebenen Garenzinken einen Räumrechen 3a mit als Räumzinken 3 wirkendenden Rechenzinken 21 aufweist. Unter einem Räumrechen 3a wird dabei insbesondere eine mindestens zwei, vorzugsweise drei, vier oder mehr, zur Verdrängung von Schüttgut vorgesehene Rechenzinken 21 aufweisende rechenartige Räumanordnung verstanden. Dabei sind die Rechenzinken 21 insbesondere parallel zu einander, vorzugsweise entlang dem Räumarm 2 im Wesentlichen fluchtend ausgerichtet. Es kann jedoch auch vorteilhaft sein, wenn die Rechenzinken 21 eine mit ihrem radialen Abstand an dem Räumarm 2 veränderliche Ausrichtung aufweisen. So kann beispielsweise ein Anstellwinkel, ein Krümmungsverlauf, eine Zinkenlänge, eine Zinkenbreite und/oder eine Zinkenform mit dem Radialabstand von der Drehachse der Welle 16, d.h. der Mittenachse 4 variieren. Die Rechenzinken 21 weisen dabei vorzugsweise eine Zinkenbreite quer zur Arbeitsdrehrichtung auf, welche höchstens in gleicher, vorzugsweise in einer geringeren Größenordnung ist wie eine Körnung des Schüttguts, um dem Drehantrieb einen möglichst geringen Widerstand entgegenzusetzen. Der Abstand zwischen benachbarten Rechenzinken ist dabei vorzugsweise von zumindest ähnlicher Größenordnung wie die Körnung des Schüttguts, um eine möglichst gezielte Verdrängung von Schüttgutkörnern durch den Räumrechen zu bewirken.

Das in der Fig. 4a gezeigte Räumorgan 2 mit einem Räumrechen 3a weist vier in der durch den Pfeil angedeuteten Arbeitsdrehrichtung gekrümmte Rechenzinken 21 auf, welche an dem Räumorgan 2 angeordnet sind und von oben durch eine Staulinie des Schüttguts in der Austragsvorrichtung greifen können.

Das in der Fig. 4b gezeigte Räumorgan 2 mit einem Räumrechen 3a ist in Bezug auf die zu der als Drehachse wirkende Mittenachse 4 senkrechte Ebene, d.h. zu der Ebene der Drehbewegung verkippt. Auch hier gibt es als Räumzinken 3 wirkende Rechenzinken 21, die an den Räumarm 2 in einem von der Mittenachse abgewandten des Räumorgan 2 angeordnet sind. Durch diese Verkippung kann eine zusätzliche Anpassung der Räumanordnung 2,3,3a an den Boden 6, insbesondere an den Diffuseurboden 6 erreicht werden.

Das in der Fig. 4c gezeigte Räumorgan 2 unterscheidet sich von dem in der Fig. 4a gezeigten Räumorgan 2 darin, dass der Räumrechen 3a als ein Schlepprechen ausgebildet ist. Dabei sind die Rechenzinken 21 entgegen der durch den Pfeil angedeuteten Arbeitsdrehrichtung 17' gekrümmt.

In einer bevorzugten Weiterbildung sind die Rechenzinken 21 des Räumrechens 3a nicht direkt mit dem Räumorgan verbunden, sondern sind an einer gemeinsamen Rechentraverse angeordnet, insbesondere an dieser befestigt. Die Rechentraverse kann dann bevorzugt wechselbar an dem Räumorgan 2 befestigt werden, wodurch abgenutzte und/oder an das jeweilige Schüttgut angepasste Räumrechen 3a leicht ausgetauscht werden können. Auch kann dadurch ein Austausch mit einer Garenzinke ermöglicht werden.

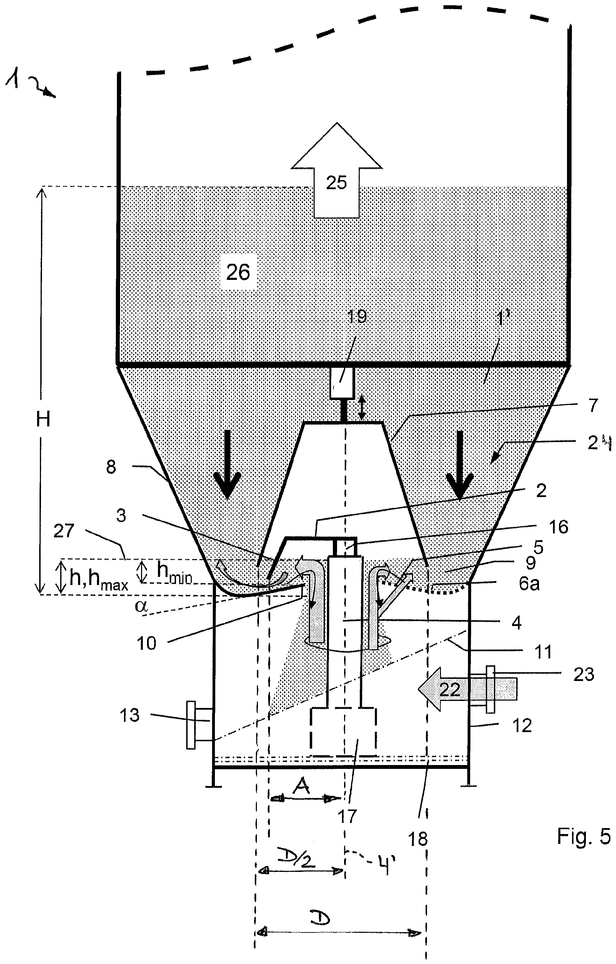

Fig. 5 zeigt eine Verwendung einer weiteren erfindungsgemäßen Einrichtung 1 mit einer zu der anhand der Fig. 1 beschriebenen ähnlichen Austragsvorrichtung für das Austragen von Schüttgut, wobei das Schüttgut durch einen entgegen der Austragsrichtung strömenden Fluidstrom 22 durchströmt werden kann. Das Einbringen des Fluidstroms erfolgt dabei quasi im Gegenstrom zu dem Austrag des Schüttguts. Besonders bevorzugte Verwendungen dieser Art ergeben sich bei Trocknungs- und/oder Vorbehandlungsanwendungen für das eingelagerte Schüttgut oder in der Reinigung von schadstoffbelasteter Abluft oder Abgas.

Die in der Fig. 5 gezeigte Einrichtung 1 kann das Unterteil eines in einer thermischen und/oder katalytischen Abluftreinigungsvorrichtung verwendeten Schüttgutbehälters sein oder auch eine Austragsvorrichtung mit einem Gehäuse, das unter einen Schüttgutbehälter fahrbar ist, der in einer thermischen und/oder katalytischen Abluftreinigungsvorrichtung verwendet wird.

Das Schüttgut 26 füllt durch Nachrutschen, Nachlaufen bzw. Nachverdichten den durch die Mantelwand 8 und den Boden 6 gebildeten Innenraum der Austragsvorrichtung aus. Wie bereits zu Fig. 1 ausgeführt, verengt der Staukonus 7 dabei einerseits den radialen Querschnitt der Schüttgutaufnahme 1' zwischen der Mantelwand 8 und dem Staukonus 7 zunehmend in Richtung Boden 6. Andererseits verengt der Staukonus 7 auch einen Austragspalt 9 zwischen dem Boden 6 und einer unteren Kante des Staukonus 7, wobei sich unter dem Staukonus 7 eine Staulinie 27 der Stauhöhe h an Schüttgut bildet. Der radial innen im Staukonus 7 angeordnete Räumarm 2 greift nun mit seiner Räumzinke 3 von oben durch die Staulinie 27. Bei Aktivierung des Motors 17 wird das als Räumarm 2 ausgebildete Räumorgan derart drehend angetrieben, dass die Räumzinke 3 einzelne Schüttgutkörner in Austragsrichtung über die Kante 10 der Austrittsöffnung 9 schiebt. Die Menge an ausgetragenem Schüttgut hängt bei der erfindungsgemäßen Ausbildung, gegebenem Schüttgut und gegebener Ausgestaltung des Räumarms 2, der Räumzinke 3 und des Bodens 6 im Wesentlichen von der Drehzahl der Welle 16 ab.

Der Boden 6 ist wie im Beispiel nach Fig. 1 als Diffuseurboden 6 ausgebildet, wobei an dieser Stelle auf die Beschreibung der Fig. 1 verwiesen, deren den Boden 6 betreffenden Merkmale auch für das Beispiel nach Fig. 5 gelten. Durch diese Ausbildung des Bodens ergibt sich bezüglich der Stauhöhe h ein Profilverlauf zwischen einer im Wesentlichen gedachten maximalen Stauhöhe hₘₐₓ außerhalb des Umfangs der unteren Kante des Staukonus 7 und einer minimalen Stauhöhe hₘᵢₙ in der Nähe der Kante 10 der Austragsöffnung 5.

Für die Einbringung des Fluidstrom 22 weist die Austragsvorrichtung weiters an ihrem unteren Gehäuse, insbesondere an einer Seitenwand 12 einen Einlassstutzen 23 auf, welcher beispielsweise mit einer Heißluft- oder Abluftleitung verbindbar ist, so dass Warm- oder Heißluft zur Trocknung, Vorbehandlungsmedium oder aber schadstoffbelastete Abluft als Fluidstrom unterhalb des Bodens 6 und der Austragsöffnung 5 in die erfindungsgemäße Austragsvorrichtung eingebracht werden kann. Ist der Einlassstutzen wie in Fig. 5 unterhalb des Schrägbodens 11 angebracht, so muss dieser zumindest abschnittsweise für den Fluidstrom 22 durchlässig ausgebildet sein oder zumindest einen Durchlass für den Fluidstrom 22 aufweisen. Es kann jedoch abweichend vorgesehen sein, dass der Einlassstutzen 23 oberhalb des Schrägbodens 11 vorgesehen ist, wodurch die Ausbildung des Schrägbodens oder alternativer Entnahme-/Fördermittel für das ausgetragenen Schüttgut weniger Beschränkungen unterliegt.

Der durch den Einlassstutzen 23 eingebrachte Fluidstrom 22 durchdringt das ausgetragene Schüttgut und dringt zumindest teilweise (rechter Teil der Fig. 5) oder vollständig (linker Teil der Fig. 5) durch die Austragsöffnung 5 in den durch die Mantelwand 8 und den Boden 6 begrenzten Innenraum, d.h. in einen durch die Mantelwand 8 und den Boden 6 gebildeten Aufnahmetrichter 24 ein. Für ein verbessertes Eindringen in das Schüttgut kann alternativ oder zusätzlich vorgesehen sein, dass, wie im rechten Teil der Fig. 5 angedeutet, der Boden 6 zumindest abschnittsweise für den Fluidstrom 22 durchlässig ausgebildet ist. Vorzugsweise ist der Boden 6 dabei aber undurchlässig für das Schüttgut ausgeführt. Dazu kann der Boden 6 beispielsweise abschnittsweise ein Lochblech mit geeigneter Lochung aufweisen. Vorzugsweise besteht der Boden aus einem geeigneten Lochblech.

Im Zuge der Durchdringung des Schüttguts mit dem Fluidstrom 22 entgegen der Austragsrichtung des Schüttguts tritt dieser mit dem Schüttgut in Wechselwirkung, wodurch beispielswiese ein Trocknungs- und oder Vorbehandlungsprozess an den Schüttgutkörnern und/oder ein Umsetzungsprozess von Bestandteilen des Fluidstroms, wie zum Beispiel eine thermische, chemische und/oder mechanische Umsetzung von im Fluidstrom mitgeführten Schadstoffen erfolgen kann. Dabei entsteht aus dem Fluidstrom 22 ein entsprechend der im Schüttgut ablaufenden Prozesse veränderter Fluidstrom 25, welcher nach oben durch den Schüttgutbehälter abgeführt werden kann. Vorzugsweise ist dazu im Schüttgutbehälter eine in Fig. 5 nicht dargestellte Abfuhr- oder Abzugseinheit vorgesehen. Ist der Fluidstrom 22 eine schadstoffbelastete Abluft, so entsteht im thermischen und/oder katalytischen Reinigungsprozess im Schüttgut von den Schadstoffen gereinigte Abluft, vorzugsweise Reingas als veränderter Fluidstrom 25.

Wird das Schüttgut nach erfolgter Trocknungs- und/oder Vorbehandlung oder durch die Wechselwirkung mit dem Fluidstrom 22 abgenutzt, beschädigt, verschmutzt oder dergleichen, kann es mit Hilfe der erfindungsgemäßen Austragsvorrichtung durch Aktivierung des Drehantriebs des Räumarms 2 sukzessive und kontrolliert aus dem Schüttgutbehälter bzw. dem Aufnahmetrichter 24 ausgetragen und zur einer Weiterbearbeitung, Weiterverarbeitung, Reinigung, Aufbereitung und/oder Einlagerung abtransportiert werden.

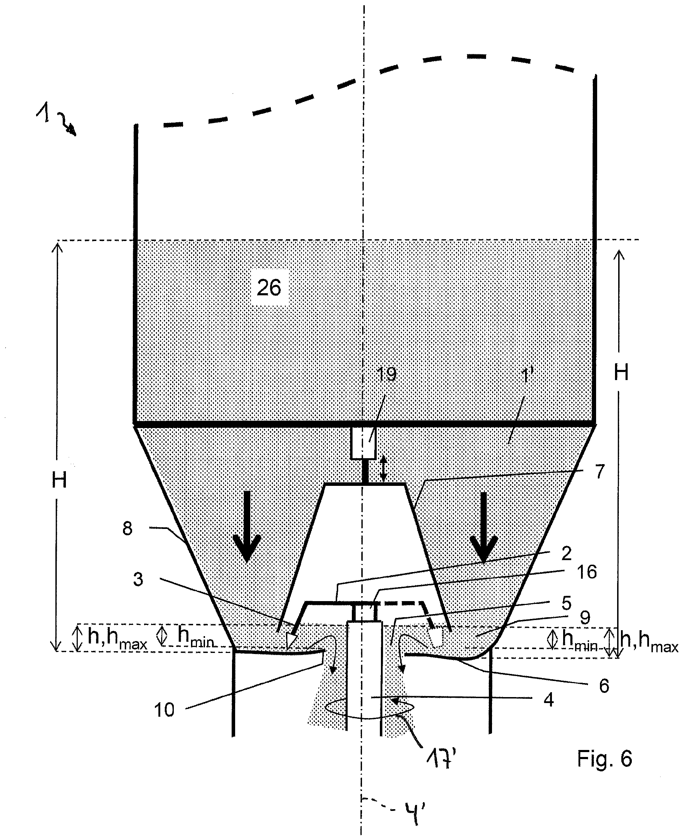

Fig. 6 zeigt eine ausschnittsweise Darstellung zweier weiterer alternativer Ausbildungen einer Einrichtung 1 für das Aufnehmen von Schüttgut mit einer Schüttgutaufnahme und mit einer Austragsvorrichtung in einer Verwendung analog zu Fig. 5. Es werden an dieser Stelle nur die bei dieser Einrichtung vorgenommenen Änderungen gegenüber der in der Fig. 5 gezeigten Einrichtung beschrieben. Im Übrigen wird auf die Beschreibung zu der anhand der Fig. 5 beschriebenen Einrichtung verwiesen.

Auf der rechten Seite der Fig. 6 ist dabei ein als Räumarm 2 ausgebildetes Räumorgan mit einer mit einem im Wesentlichen dreieckigen Räumkörper 20, 20b versehenen Garenzinke 3 angedeutet, während der Boden 6 als Diffuseurboden 6 mit einer kleinen, einfachen Welle zunächst fallend und dann zur Kante 10 hin ansteigend ausgebildet ist. Auf der linken Seite der Fig. 6 ist wiederum ein als Räumarm 2 ausgebildetes Räumorgan mit einer mit einem spatenblattförmigen Räumkörper 20, 20a versehenen Räumzinke 3 angedeutet, wobei der Boden 6 als geschwungener Diffuseurboden 6 ausgebildet ist, wobei in der Nähe der Kante 10 ein im Wesentlichen ebenes Plateau angeformt ist. Auch hier ergibt sich eine maximale Stauhöhe hₘₐₓ außerhalb der Umfangslinie des Staukonus 7 und eine minimale Stauhöhe hₘᵢₙ innerhalb der Umfangslinie des Staukonus, wobei die radiale Position des Stauhöheminimums durch das Plateau bestimmt werden kann. In seinem weiteren Aufbau entsprechen die Ausführungsbeispiele nach Fig. 6 dem Beispiel nach Fig. 5, so dass bezüglich der weiteren Merkmale, der Funktionsweise und Verwendung auf die vorhergehende Beschreibung des Beispiels nach Fig. 5 verwiesen wird.

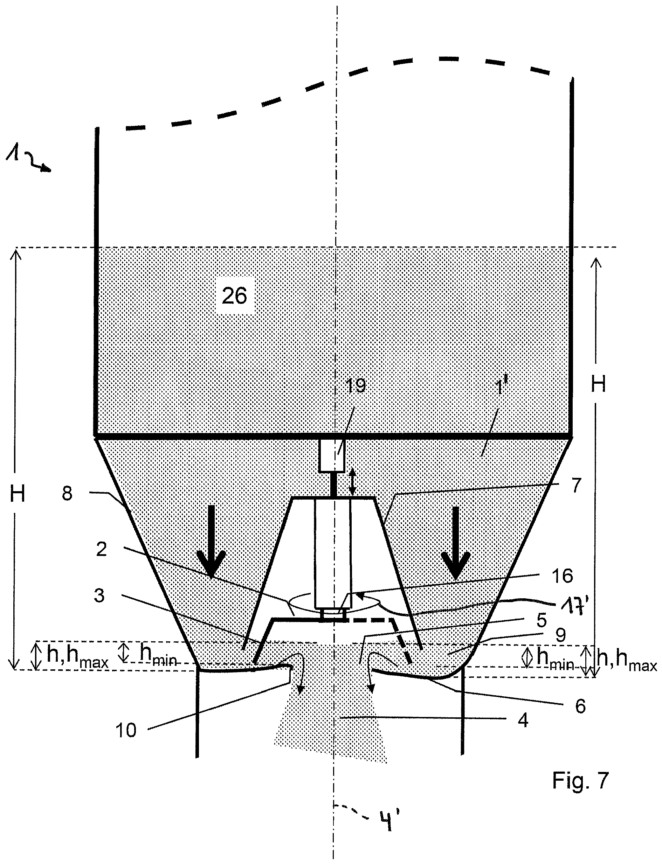

Die Fig. 7 zeigt eine ausschnittsweise Darstellung zweier weiterer alternativer Ausbildungen einer Einrichtung 1 für das Aufnehmen von Schüttgut mit einer Schüttgutaufnahme und mit einer Austragsvorrichtung in einer Verwendung analog zu Fig. 5. Es wird an dieser Stelle nur auf die Änderungen eingegangen. Im Übrigen gilt die Beschreibung zu Fig. 5 hinsichtlich Aufbau und Wirkungsweise. Beiden gezeigten Varianten ist dabei gemein, dass der Drehantrieb der Welle 16 und damit des Räumarms 2 nicht unterhalb der Austragsöffnung 5 sondern im Inneren des Staukonus 7 angeordnet, insbesondere mit der Innenseite Staukonus 7 verbunden ist. Dadurch wird der Raum unterhalb der Austragsöffnung 5 nun von jeglichen Restriktionen hinsichtlich der Anordnung von Förder- und/oder anderer Prozesstechnik für das ausgetragene Schüttgut vorteilhaft befreit.

Auf der rechten Seite der Fig. 7 ist dabei ein Räumarm 2 mit einer Räumzinke 3, insbesondere einer Garenzinke 3 oder einem Räumrechen 3a angedeutet, während der Boden 6 als Diffuseurboden 6 mit einer kleinen, einfachen Welle zunächst fallend und dann zur Kante 10 hin ansteigend ausgebildet ist, wobei die Kante 10 selbst leicht abfallend ausgeformt ist. Auf der linken Seite der Fig. 7 ist wiederum ein Räumarm 2 mit einer Räumzinke 3, insbesondere einer Garenzinke 3 oder einem Räumrechen 3a angedeutet, wobei der Boden 6 als geschwungener Diffuseurboden 6 ähnlich Fig. 1 oder Fig. 5 ausgebildet ist. Auch hier ergibt sich in beiden Ausführungen eine maximale Stauhöhe hₘₐₓ außerhalb der Umfangslinie des Staukonus 7 und eine minimale Stauhöhe hₘᵢₙ innerhalb der Umfangslinie des Staukonus. In seinem weiteren Aufbau entsprechen die Ausführungsbeispiele nach Fig. 7 dem Beispiel nach Fig. 5, so dass bezüglich der weiteren Merkmalen, der Funktionsweise und Verwendung auf die vorhergehende Beschreibung des Beispiels nach Fig. 5 verwiesen wird.

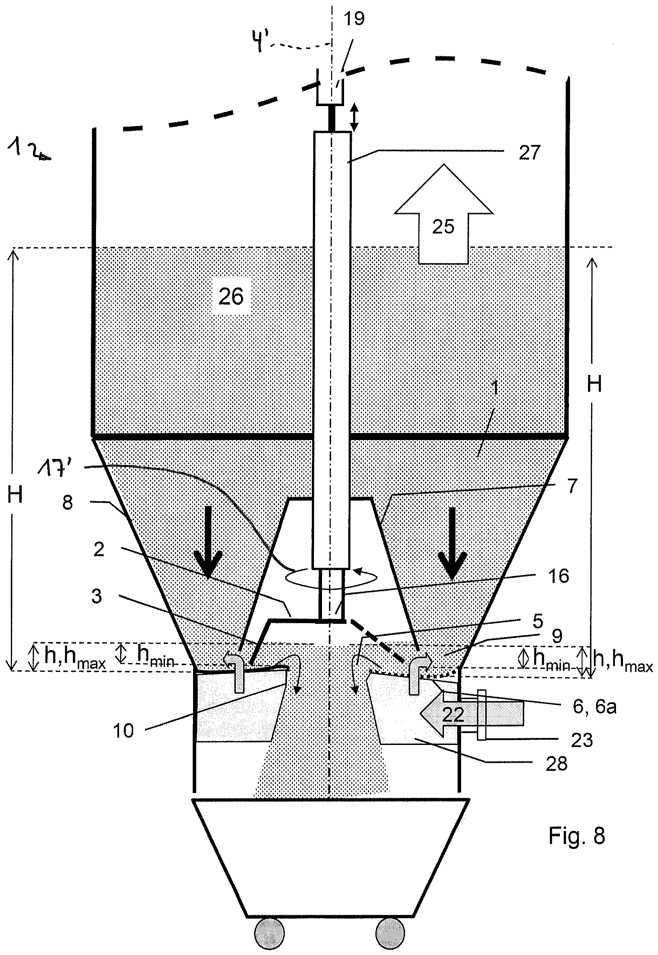

Fig. 8 zeigt eine ausschnittsweise Darstellung zweier weiterer alternativer Ausbildungen einer Einrichtung für das Aufnehmen von Schüttgut mit einer Schüttgutaufnahme und mit einer Austragsvorrichtung in einer Verwendung ähnlich zu Fig. 5. Es wird an dieser Stelle nur auf die Änderungen eingegangen. Im Übrigen gilt die Beschreibung zu Fig. 5 hinsichtlich Aufbau und Wirkungsweise. Beiden gezeigten Varianten ist dabei gemein, dass der Drehantrieb der Welle 16 und damit des Räumarms 2 nicht unterhalb der Austragsöffnung 5 sondern innerhalb einer durch den Schüttgutbehälter und den Aufnahmetrichter 24 hindurchgeführten Hohlrohr 27 angeordnet ist. In einem der Auftragsöffnung 5 zugewandten Endbereich des Hohlrohrs 27 ist dabei der Staukonus 7 am Hohlrohr 27 angeordnet, vorzugsweise befestigt. Gleichzeitig kann über die oben im Schüttgutbehälter angeordnete Hebevorrichtung 19 sowohl der Staukonus 7 als auch der Räumarm 2 hinsichtlich einer axialen Höhe entlang der Austragsrichtung angepasst werden. Durch das lange Hohlrohr 27 kann die Hebevorrichtung 19 und der Drehantrieb außerhalb des Schüttguts platziert werden. Alternativ ist es auch denkbar, dass die Hebevorrichtung 19 analogerweise in zu den anhand der Fig. 1, der Fig. 5 und der Fig. 6 beschriebenen Einrichtungen auf einer Traverse im Aufnahmetrichter 24 angeordnet ist, wobei das Hohlrohr 27 dann vorteilhaft kürzer ausfallen kann. Auch durch diese Maßnahmen kann wie in den anhand der Fig. 7 beschriebenen Einrichtungen der Raum unterhalb der Austragsöffnung 5 nun von jeglichen Restriktionen hinsichtlich der Anordnung von Förder- und/oder anderer Prozesstechnik für das ausgetragene Schüttgut vorteilhaft befreit werden. Dazu ist in der Fig. 8 ein Förderfahrzeug als alternative Fördertechnik beispielhaft angedeutet.

Weiters ist den Ausführungsvarianten nach Fig. 8 gemein, dass der Einlassstutzen 23 für die Zuführung des Fluidstrom 22 in eine unterhalb des Bodens 6 verlaufende Ringleitung 28 mündet. Die Ringleitung 22 weist dabei an ihrer dem Boden 6 zugewandten Seitenfläche Mittel zum Einblasen, Einsaugen, Eindüsen oder Einlassen des Fluidstroms 22 in den Aufnahmetrichter 24 auf. Diese Mittel können dabei beispielsweise ein zu einem fluiddurchlässigen Boden 6 korrespondierendes Lochblech und/oder eine oder mehrere durch den Boden greifende Düsenlöcher, Düsenkanäle und dergleichen sein.

Auf der rechten Seite der Fig. 8 ist dabei, wie aus Fig. 1 oder 5 bekannt, ein Räumarm 2 mit einer Räumzinke 3, insbesondere einer Garenzinke 3 oder einem Räumrechen 3a angedeutet, während der Boden 6 als Diffuseurboden 6 mit einer kleinen, einfachen Welle zunächst fallend und dann zur Kante 10 hin ansteigend ausgebildet ist, wobei die Kante selbst leicht abfallend ausgeformt ist. Durch den Boden 6 greifen dabei vom Ringkanal 28 ausgehend Düsenlöcher, Düsenbohrungen oder ähnliche Durchführungen für das Fluid 22 hindurch. Auf der linken Seite der Fig. 8 ist wiederum ein abgewinkelter Räumarm 2 mit einer Räumzinke 3, insbesondere einer Garenzinke 3 oder einem Räumrechen 3a angedeutet, wobei der Boden 6 als ein geschwungener Diffuseurboden 6 mit einem fluiddurchlässigen Abschnitt ähnlich Fig. 5 ausgebildet ist. Auch hier ergibt sich in beiden Ausführungen eine maximale Stauhöhe hₘₐₓ außerhalb der Umfangslinie des Staukonus 7 und eine minimale Stauhöhe hₘᵢₙ innerhalb der Umfangslinie des Staukonus. In seinem weiteren Aufbau entsprechen die Ausführungsbeispiele nach Fig. 8 dem Beispiel nach Fig. 5, so dass bezüglich der weiteren Merkmale, der Funktionsweise und Verwendung auf die vorhergehende Beschreibung des Beispiels nach Fig. 5 verwiesen wird.

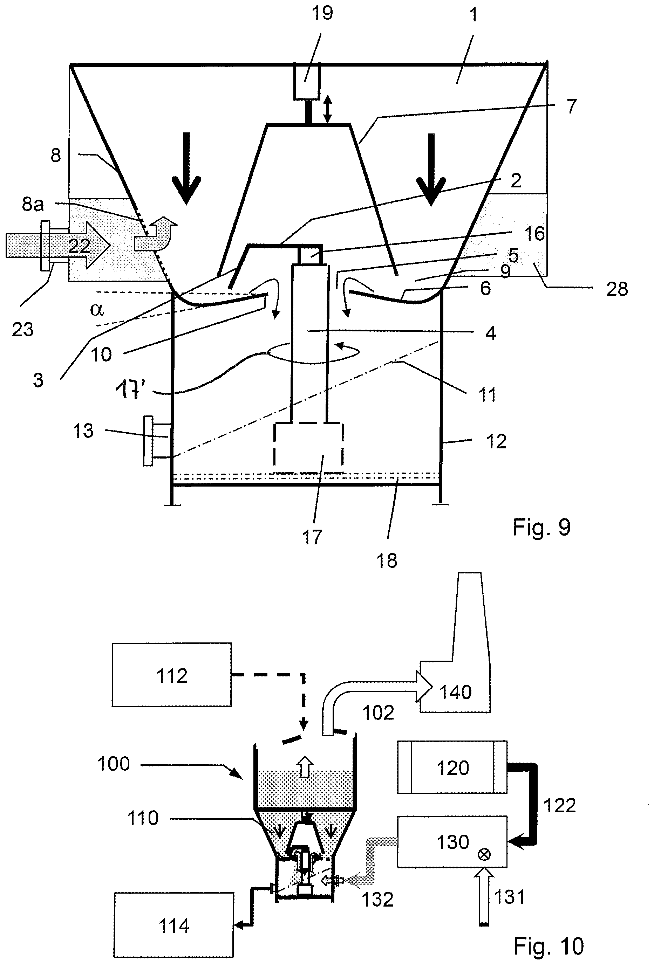

Fig. 9 zeigt eine weitere Variante einer erfindungsgemäßen Einrichtung für das Aufnehmen von Schüttgut mit einer Schüttgutaufnahme und mit einer Austragsvorrichtung ähnlich der anhand von Fig. 1 oder Fig. 5_beschriebenen Einrichtung, wobei in dieser Ausführung zumindest ein Teilabschnitt 8a der Mantelwand 8 als fluiddurchlässiger Abschnitt ausgebildet ist. Dieser Teilabschnitt 8a wird nach radial außenliegend vorzugsweise von einem Ringkanal 28 umschlossen, an welchem der Einlassstutzen 23 zur Zufuhr des Fluidstroms 22 angeordnet ist. In seinem weiteren Aufbau entsprechen die Ausführungsbeispiele nach Fig. 9 dem Beispiel nach Fig. 5, so dass bezüglich der weiteren Merkmalen, der Funktionsweise und Verwendung auf die vorhergehende Beschreibung des Beispiels nach Fig. 5 verwiesen wird.

Ausgehend von den im Vorhergehenden im Detail beschriebenen Ausführungsbeispielen wird der Fachmann durch Kombination der Merkmale leicht weitere erfindungsgemäße Abwandlungen und Weiterbildungen finden. So ist es zum Beispiel denkbar, dass anstelle eines Einlassstutzens 23 zwei oder mehr Einlassstutzen vorgesehen sind, über welche dann möglicherweise auch unterschiedliche Fluidströme 22 in das Schüttgut eingeleitet werden können. Auch kann die Kombination der verschiedenen Zufuhr- oder Einlassvarianten in das Schüttgut wie beispielsweise durch die Austragsöffnung 5, durch den Boden 6, durch die Mantelwand 8 und/oder mittels Ringkanälen 28 oder anderer Zuleitungen vorteilhafte, erfindungsgemäße Kombinationen ergeben. Auch in der Art und Weise der Abfuhr des ausgetragenen Schüttguts steckt eine Vielzahl von Variationsmöglichkeiten, welche im Wesentlichen durch die Anwendung der erfindungsgemäßen Austragsvorrichtung bestimmt werden.

Die Fig. 10 zeigt schließlich ein schematisches Flussdiagramm eines Verfahrens zur thermischen und/oder katalytischen Reinigung einer schadstoffbelasteten Abluft mit Hilfe eines in einem Schüttgutbehälter 100 aufnehmbaren Schüttguts und einer erfindungsgemäßen Austragsvorrichtung 110. Zur Herstellung der Betriebsbereitschaft muss dabei in einem Vorbereitungsschritt 112 geeignetes Schüttgut, beispielsweise keramisches Granulat, keramische Wärmespeicherkörper, Katalysatorkörper oder dergleichen in den Schüttgutbehälter eingebracht werden. Sobald dies erfolgt ist, kann schadstoffbelastete Abluft 122 eines Arbeitsprozesses 120 einem Vorbehandlungs-, insbesondere Aufheizprozess 130 zugeführt werden. Der Aufheizprozess 130 kann dabei auf einen mit einem zusätzlich zugeführten Brennstoff 131 betriebenen Brenner zurückgreifen. In einer besonders bevorzugten Variante kann der Aufheizprozess 130 durch eine einen Brenner, einen Verdichter und eine Turbine umfassende Gasturbinenanlage, insbesondere eine Mikrogasturbine erfolgen, welche gleichzeitig noch mechanische und/oder elektrische Energie zur Verfügung stellen kann. Die so vorbehandelte Abluft 132 wird dann über den Einlassstutzen der aus der Austragsvorrichtung 110 und dem Schüttgutbehälter 100 gebildeten Abluftreinigungsvorrichtung zugeführt. In der im Vorhergehenden beschriebenen Art und Weise wird die vorbehandelte Abluft 132 nun durch Wechselwirkung mit dem Schüttgut gereinigt und vorzugsweise als Reingas 102 an einen Nachfolgeprozess weitergeleitet. Im vereinfachten Flussdiagramm nach Fig. 10 wird das Reingas 102 über einen Schlot 140 freigesetzt.

Zusammenfassend sind insbesondere folgende bevorzugte Merkmale der Erfindung festzuhalten:
Eine Einrichtung 1 für das Aufnehmen von Schüttgut 26 hat eine Schüttgutaufnahme 1' und enthält eine Austragsvorrichtung. Die Schüttgutaufnahme 1' hat einen Boden 6 mit einer Austragsöffnung 5 und weist eine Mantelwand 8 auf. Die Austragsvorrichtung umfasst einen an einer Lagersäule 4 um eine die Austragsöffnung 5 durchstoßende Mittenachse 4' drehbar gelagertes insbesondere als Räumarm 2 ausgebildetes Räumorgan und einen oberhalb des Bodens 6 angeordneten Staukonus 7. Der Staukonus 7 bildet mit der Mantelwand 8 und dem Boden 6 einen Austragsspalt 9. Die Einrichtung enthält einen Antrieb 17 für den Räumarm 2, mit dem das Räumorgan 2 um die Mittenachse 4' in einer Arbeitsdrehrichtung 17' gedreht werden kann. An dem wenigstens einen Räumorgan 2 ist wenigstens eine Räumzinke 3 befestigt, die bei einer Drehbewegung des Räumorgans 2 um die Mittenachse 4' in der Arbeitsdrehrichtung 17' in das in der Schüttgutaufnahme 1' aufgenommene Schüttgut 26 eintaucht und das Schüttgut 26 zu der Mittenachse 4' drängt, wobei das Schüttgut 26 durch die Austragsöffnung 5 in dem Boden 6 fällt.

Der Staukonus 7 übergreift dabei das Räumorgan 2. Alternativ oder zusätzlich kann der Boden 6 als ein zu der Austragsöffnung 5 ansteigend verlaufender Diffuseurboden ausgebildet sein. Bevorzugt hat der der zur Austragsöffnung 5 ansteigend verlaufende Diffuseurboden 6 dann einen Rundungsabschnitt und eine Schrägfläche. In Weiterbildung der Einrichtung umgibt die Austragsöffnung 5 die Lagersäule 4 ringförmig.

Bei einer bevorzugten Ausführungsform der Einrichtung 1 gibt es eine erste (äußere) und eine zweite (innere) an dem Räumarm 2 befestigte, als eine Garenzinke 3 ausgebildete Räumzinke. Diese Räumzinken sind radial und in der Höhe zueinander versetzt angeordnet. Sie tauchen bei einer Drehbewegung des Räumorgans 2 um die Mittenachse in der Arbeitsdrehrichtung 17' in das in der Schüttgutaufnahme 1' aufgenommene Schüttgut ein, wobei die äußere Räumzinke 3 ein Ende 3' hat, das vor dem Rundungsabschnitt des Diffuseurbodens 6 endet, und die innere Räumzinke 3 ein Ende hat, das oberhalb der Schrägfläche des Diffuseurbodens 6 endet.

In einer bevorzugten Ausgestaltung der Erfindung ist vorgesehen, dass die wenigstens eine Räumzinke 3 bei der Drehbewegung des Räumorgans 2 um die Mittenachse 4' auf einer Umlaufbahn bewegt wird, auf welcher der Abstand A eines von der Mittenachse 4' abgewandten bodenseitigen Endes der Räumzinke 3 kleiner ist als der halbe Durchmesser D der zu der Austragsöffnung 5 weisenden Öffnung des Staukonus 7.

Der Staukonus 7 kann eine mit der Mittenachse 4' fluchtende Achse haben. Bevorzugt ist die wenigstens eine Räumzinke 3 als eine Garenzinke 3a, 3b ausgebildet. Diese Garenzinke 3 kann aus Federstahl bestehen. Sie hat einen in das Schüttgut eintauchbaren, ersten gebogenen Abschnitt 14, der in einen zweiten bogenförmig gekrümmten, an dem Räumorgan 2 befestigten Abschnitt 15 übergeht, der in das Innere des Staukegels 7 erstreckt ist. Die wenigstens eine Räumzinke 3 kann auch als ein Räumrechen 3a ausgebildet sein.

Bevorzugt ist der Räumarm der Einrichtung an einer aus der Lagersäule 4 vorstehenden Antriebswelle 16 befestigt. Die wenigstens eine Räumzinke 3 kann an ihrem in das Schüttgut greifenden Ende 3' zumindest einen Räumkörper 20 aufweisen. Von Vorteil ist es, wenn die Einrichtung einen unterhalb der Austragsöffnung 5 angeordneten Schrägboden 11 mit Seitenwänden 12 umfasst, der in eine - vorzugsweise mit einem Schüttgutförderer verbindbare - Austragsrinne oder in ein - vorzugsweise mit einem Schüttgutförderer verbindbares - Austragsrohr 13 mündet. Die Einrichtung kann auch mehrere an der Lagersäule 4 drehbar gelagerte und in Bezug auf die Mittenachse 4' zueinander azimutal versetzt angeordnete Räumarme 2 mit wenigstens einer Räumzinke 3 aufweisen. Diese mehreren Räumarme 2 können insbesondere um den Azimutwinkel α = 180° oder α = 120° zueinander versetzt angeordnet sein.

Eine bevorzugte Ausgestaltung der Erfindung sieht vor, dass der Staukonus 7 höhenverstellbar über dem Boden 6 angeordnet ist und/oder dass der Staukonus 7 eine geschlossene oder eine gelochte Wandung aufweist.

Die Schüttgutaufnahme 1' ist möglichst in der nach unten weisenden Richtung trichterförmig verjüngt, vorzugsweise konisch verjüngt ausgebildet, wobei die Mantelwand 8 bogenförmig in den Diffuseurboden 6 übergeht. Es ist möglich, die Mantelwand 8 der Einrichtung geschlossen oder gelocht auszuführen.

Die Einrichtung kann z.B. als Schüttgutbehälter oder als Unterteil eines Schüttgutbehälters oder als eine unter einen Schüttgutbehälter bewegbare - insbesondere fahrbare - Ausräumvorrichtung mit Gehäuse ausgebildete Einrichtung für das Aufnehmen von Schüttgut mit einer Schüttgutaufnahme und mit einer Austragsvorrichtung ausgebildet sein.

Eine erfindungsgemäße Einrichtung kann insbesondere in einer Anlage für das Behandeln von gasförmigem Fluid eingesetzt werden, insbesondere in einer Anlage für das thermische und/oder katalytische Reinigen von schadstoffbelasteter Abluft, insbesondere von Abluft, die siliziumorganische Verbindungen enthält. Hierzu wird bei der Einrichtung ein mit der Schüttgutaufnahme 1' kommunizierender Anschluss 23 für das Zuführen des zu Behandelnden gasförmigem Fluid vorgesehen, um die Schüttgutaufnahme 1' mit dem zugeführten gasförmigen Fluid zu durchströmen und darin aufgenommenes Schüttgut 26 mit dem gasförmigen Fluid zu beaufschlagen. Das an dem Anschluss 23 zugeführte gasförmige Fluid ist dabei auf einem die Austragsöffnung 5 zumindest teilweise durchsetzenden Strömungsweg in die Schüttgutaufnahme 1' geführt. Eine erfindungsgemäße Einrichtung kann also auch in einer Abluftreinigungsanlage, insbesondere in einer thermischen und/oder katalytischen Abluftreinigungsvorrichtung eingesetzt werden.

Für das Austragen von Schüttgut 26 aus der Schüttgutaufnahme einer erfindungsgemäßen Einrichtung wird die wenigstens eine Räumzinke 3 günstiger Weise auf einer Umlaufbahn in das in der Schüttgutaufnahme 1' aufgenommene Schüttgut 26 von oben eingetaucht und um die Mittenachse 4' bewegt, wodurch die wenigstens eine Räumzinke 3 das Schüttgut 26 verdrängt und vereinzelt und über eine Kante 10 des Bodens 6 in die Austragsöffnung 5 fördert.

Von Vorteil ist es dabei, wenn die wenigstens eine Räumzinke 3 unterhalb des Staukonus 7 bewegt wird, wobei der Staukonus 7 für das in der Schüttgutaufnahme 1' aufgenommene Schüttgut 26 eine in der zu der Mittenachse 4' weisenden Richtung abnehmende Stauhöhe hₘᵢₙ ≤ h ≤ hₘₐₓ einstellt. Dies kann insbesondere dadurch erreicht werden, dass der Durchmesser der Umlaufbahn größer ist als der Durchmesser der zu der Austragsöffnung 5 weisenden Öffnung des Staukonus 7.

Um mit einer erfindungsgemäßen Einrichtung gasförmiges Fluid zu behandeln, insbesondere um damit mit Schadstoffen belastete Abluft, insbesondere Abluft, die siliziumorganische Verbindungen enthält, thermisch und/oder katalytisch zu reinigen, wird die Schüttgutaufnahme 1' mit einem keramischen Granulat, einem keramischen Wärmespeicherkörper, einem Katalysatorkörper oder dergleichen, aber auch einem kalk- und/oder kohlenstoffhaltigen partikelförmigen Material als Schüttgut 26 angefüllt und das zu behandelnde gasförmige Fluid in den Schüttgutbehälter 1 zugeführt, wobei das Schüttgut 26 in dem Schüttgutbehälter 1 mit dem zugeführten gasförmigen Fluid beaufschlagt und gleichzeitig aus der Schüttgutaufnahme 1' ausgetragen wird.

Die Erfindung erstreckt sich auch auf eine Austragsvorrichtung für einen Schüttgutbehälter 1 mit wenigstens einem Räumarm 2, der in seiner Arbeitsstellung mittels eines Antriebs eine Drehbewegung um die Mittenachse des Schüttgutbehälters 1 in Arbeitsdrehrichtung ausführt und dabei mittels einer daran befestigten Räumzinke 3 aus dem Bodenbereich der Austragsvorrichtung das Schüttgut zur Lagersäule 4 des Räumarmes 2 drängt, wobei das Schüttgut durch eine die Lagersäule 4 ringförmig umgebende Austragsöffnung 5 in den Boden 6 fällt, und mit einem mittigen, oberhalb des Bodens 6 angeordneten Staukonus 7, der mit der Mantelwand 8 des Schüttgutbehälters 1 und dem Boden 6 einen Austragsspalt 9 bildet, wobei der Boden 6 als Diffuseurboden zur Austragsöffnung 5 ansteigend verlaufend ausgebildet ist, dass die Räumzinke 3 eine Garenzinke ist und innerhalb des Staukonusses 7 verlaufend angeordnet ist und von oben in das Schüttgut eintaucht und oberhalb des Diffuseurbodens 6 endet und derart ausgeführt ist, dass sie einzelnes Schüttgut über die Kante 10 des Diffuseurbodens 6 in die Austragsöffnung 5 fördert, und dass unterhalb der Austragsöffnung 5 ein Schrägboden 11 mit Seitenwänden 12 angeordnet ist, der in eine Austragsrinne oder in ein Austragsrohr 13 mündet.

Ein Aspekt der Erfindung ist insbesondere, dass der Wandwinkel (a) und die Radien des Diffuseurbodens 6 sowie die Räumzinken 3 in ihrer geometrischen Auslegung auf das auszutragende Schüttgut abgestimmt sind.

Ein Aspekt der Erfindung ist weiter, dass die Garenzinke 3 aus Federstahl besteht und einen in das Schüttgut eintauchenden, geschwungen ausgeführten Abschnitt 14 aufweist, der eine Verlängerung eines bogenförmigen, hochstehend in den Staukegel sich erstreckenden ringförmigen Metallteils 15 ist, der an dem Räumarm 2 und dieser an der aus der Lagersäule 4 vorstehenden Antriebswelle 16 befestigt ist. Außerdem ist es ein Aspekt der Erfindung, dass paarweise zwei Garenzinken 3 in das Schüttgut eintauchen, wobei die Anordnung radial- und höhenversetzt vorgesehen ist, derart, dass das Ende der äusseren Garenzinke 3 vor dem Rundungsteil des Diffuseurbodens 6 endet, während das Ende der inneren Garenzinke 3 oberhalb der Schrägfläche des Diffuseurbodens 6 endet.

Es können mehrere Garenzinken auf der Umlaufbahn verteilt, insbesondere um 180° oder 120° versetzt, an der Welle angeordnet sein.

Der Staukonus 7 kann höhenverstellbar in der Austragsvorrichtung oder im Schüttgutbehälter 1 angeordnet sein und eine geschlossene oder eine gelochte Wandung aufweisen. Ein Aspekt der Erfindung besteht auch darin, dass die Mantelwand 8 der Austragsvorrichtung oder des Schüttgutbehälters 1 konisch nach unten verjüngend zulaufend ausgebildet ist und bogenförmig in den Diffuseurboden 6 übergeht und geschlossen oder gelocht ausgeführt ist. Die Austragsrinne oder das Austragsrohr 13 kann dabei mit einem Schüttgutförderer verbindbar sein.

### Bezugszeichenliste

- 1: Einrichtung
- 1': Schüttgutaufnahme
- 2: Räumarm
- 3: Räumzinke/Garenzinke
- 4: Lagersäule
- 4': Mittenachse
- 5: Austragsöffnung
- 6: Boden/Diffuseurboden
- 7: Staukonus
- 8: Mantelwand
- 9: Austragsspalt
- 10: Kante
- 11: Schrägboden
- 12: Seitenwände
- 13: Austragsrohr
- 14: Abschnitt
- 15: Metallteil
- 16: Antriebswelle
- 17: Motor
- 17': Arbeitsdrehrichtung
- 18: Boden
- 19: Hebevorrichtung
- 20: Räumkörper
- 21: Rechenzinken
- 22: Fluidstrom
- 23: Einlassstutzen
- 24: Aufnahmetrichter
- 25: veränderter Fluidstrom
- 26: Schüttgut
- 27: Hohlrohr
- 28: Ringleitung
- α: Winkel

## Patentansprüche

1. Einrichtung (1) für das Aufnehmen von Schüttgut (26), mit einer Schüttgutaufnahme (1') und mit einer Austragsvorrichtung,
wobei die Schüttgutaufnahme (1') einen Boden (6) mit einer Austragsöffnung (5) hat und eine Mantelwand (8) aufweist, und
wobei die Austragsvorrichtung wenigstens einen an einer Lagersäule (4) um eine die Austragsöffnung (5) durchstoßende Mittenachse (4') drehbar gelagertes Räumorgan (2) und einen oberhalb des Bodens (6) angeordneten Staukonus (7) umfasst, der mit der Mantelwand (8) und/oder dem Boden (6) einen Austragsspalt (9) bildet, wobei die Austragsvorrichtung ferner einen Antrieb (17) für das Räumorgan (2) enthält, mit dem das Räumorgan (2) um die Mittenachse (4') in einer Arbeitsdrehrichtung (17') gedreht werden kann, und
wobei an dem wenigstens einen Räumorgan (2) wenigstens eine Räumzinke (3) befestigt ist, die bei einer Drehbewegung des Räumorgans (2) um die Mittenachse (4') in der Arbeitsdrehrichtung (17') in das in der Schüttgutaufnahme (1') aufgenommene Schüttgut (26) eintaucht und das Schüttgut (26) zu der Mittenachse (4') drängt, wobei das Schüttgut (26) durch die Austragsöffnung (5) von dem Boden (6) fällt,
**dadurch gekennzeichnet, dass**
das Räumorgan (2) innerhalb des Staukonus (7) angeordnet ist, so dass der Staukonus das Räumorgan (2) vollständig übergreift.

2. Einrichtung nach Anspruch 1, **dadurch gekennzeichnet, dass** der Boden als ein zur Austragsöffnung (5) ansteigend verlaufender Diffuseurboden (6) ausgebildet ist.

3. Einrichtung (1) nach Anspruch 2,
**dadurch gekennzeichnet, dass**
der zur Austragsöffnung (5) ansteigend verlaufende Diffuseurboden (6) einen Rundungsabschnitt und eine Schrägfläche hat.

4. Einrichtung nach Anspruch 3, **gekennzeichnet durch** eine erste (äußere) und eine zweite (innere) an dem Räumorgan (2) befestigte, als eine Garenzinke (3) ausgebildete Räumzinke, die radial und in der Höhe zueinander versetzt angeordnet sind und die bei einer Drehbewegung des Räumorgan (2) um die Mittenachse in der Arbeitsdrehrichtung (17') in das in der Schüttgutaufnahme (1') aufgenommene Schüttgut eintauchen, wobei die äußere Räumzinke (3) ein Ende (3') hat, das vor dem Rundungsabschnitt des Diffuseurbodens (6) endet, und die innere Räumzinke (3) ein Ende hat, das oberhalb der Schrägfläche des Diffuseurbodens (6) endet.

5. Einrichtung nach einem der Ansprüche 1 bis 4, **dadurch gekennzeichnet, dass** die Austragsöffnung (5) die Lagersäule (4) ringförmig umgibt und/oder die wenigstens eine Räumzinke (3) bei der Drehbewegung des Räumorgans (2) um die Mittenachse (4') auf einer Umlaufbahn bewegt wird, auf welcher der Abstand (A) eines von der Mittenachse (4') abgewandten bodenseitigen Endes der Räumzinke (3) kleiner ist als der halbe Durchmesser (D) der zu der Austragsöffnung (5) weisenden Öffnung des Staukonus (7) und/oder der Staukonus (7) eine mit der Mittenachse (4') fluchtende Achse hat.

6. Einrichtung nach einem der Ansprüche 1 bis 5, **gekennzeichnet durch** wenigstens eine als Garenzinke ausgebildete Räumzinke (3).

7. Einrichtung nach Anspruch 6, **dadurch gekennzeichnet, dass** die Garenzinke (3) aus Federstahl besteht und einen in das Schüttgut eintauchbaren, ersten gebogenen Abschnitt (14) aufweist, der in einen zweiten bogenförmig gekrümmten, an dem Räumorgan (2) befestigten Abschnitt (15) übergeht, der in das Innere des Staukegels (7) erstreckt ist.

8. Einrichtung nach Anspruch 7, **dadurch gekennzeichnet, dass** die wenigstens eine Räumzinke (3) ein Räumrechen (3a) ist.

9. Einrichtung nach einem der Ansprüche 1 bis 8, **dadurch gekennzeichnet, dass** das Räumorgan an einer aus der Lagersäule (4) vorstehenden Antriebswelle (16) befestigt ist, und/oder die wenigstens eine Räumzinke (3) an ihrem in das Schüttgut greifenden Ende (3') zumindest einen Räumkörper (20) aufweist, und/oder ein unterhalb der Austragsöffnung (5) angeordneter Schrägboden (11) mit Seitenwänden (12) vorgesehen ist, der in eine - vorzugsweise mit einem Schüttgutförderer verbindbare - Austragsrinne oder in ein - vorzugsweise mit einem Schüttgutförderer verbindbares - Austragsrohr (13) mündet, und/oder das Räumorgan als ein Räumarm (2) ausgebildet ist, und/oder mehrere an der Lagersäule (4) drehbar gelagerte und in Bezug auf die Mittenachse (4') zueinander azimutal versetzt angeordnete Räumarme (2) mit wenigstens einer Räumzinke (3) vorgesehen sind.

10. Einrichtung nach einem der Ansprüche 1 bis 9, **dadurch gekennzeichnet, dass** der Staukonus (7) höhenverstellbar über dem Boden (6) angeordnet ist und /oder dass der Staukonus (7) eine geschlossene oder eine gelochte Wandung aufweist und/oder die Schüttgutaufnahme (1') in der nach unten weisenden Richtung trichterförmig verjüngt, vorzugsweise konisch verjüngt ausgebildet ist und die Mantelwand (8) bogenförmig in den Diffuseurboden (6) übergeht, wobei die Mantelwand (8) vorzugsweise geschlossen oder gelocht ausgeführt ist.

11. Einrichtung nach einem der Ansprüche 1 bis 10, wobei diese als Schüttgutbehälter oder als Unterteil eines Schüttgutbehälters oder als eine unter einem Schüttgutbehälter bewegbare - insbesondere fahrbare - Ausräumvorrichtung mit Gehäuse ausgebildet ist.

12. Anlage für das Behandeln von gasförmigem Fluid, insbesondere für das thermische und/oder katalytische Reinigen von schadstoffbelasteter Abluft, insbesondere von Abluft, die siliziumorganische Verbindungen enthält, **gekennzeichnet durch** eine gemäß einem der Ansprüche 1 bis 10 ausgebildeten Einrichtung, wobei die Einrichtung einen mit der Schüttgutaufnahme (1') kommunizierenden Anschluss (23) für das Zuführen des zu behandelnden gasförmigem Fluid hat, um die Schüttgutaufnahme (1') mit dem gasförmigen Fluid zu durchströmen und darin aufgenommenes Schüttgut (26) mit dem gasförmigen Fluid zu beaufschlagen.

13. Anlage nach Anspruch 12, **dadurch gekennzeichnet, dass** an dem Anschluss (23) zugeführtes gasförmige Fluid auf einem die Austragsöffnung (5) zumindest teilweise durchsetzenden Strömungsweg in die Schüttgutaufnahme (1') geführt ist.

14. Verwendung von einer gemäß einem der Ansprüche 1 bis 10 ausgebildeten Einrichtung für das Aufnehmen von Schüttgut (26) mit einer Schüttgutaufnahme und mit einer Austragsvorrichtung in einer Abluftreinigungsanlage, insbesondere in einer thermischen und/oder katalytischen Abluftreinigungsvorrichtung und/oder für das Reinigen von siliziumorganische Verbindungen enthaltender Abluft.

15. Verfahren zum Austragen von Schüttgut (26) aus einer Schüttgutaufnahme (1') mit Hilfe einer Austragsvorrichtung,
wobei die Schüttgutaufnahme (1') einen Boden (6) mit einer Austragsöffnung (5) hat und eine Mantelwand (8) aufweist, und
wobei die Austragsvorrichtung wenigstens ein um eine die Austragsöffnung (5) durchsetzende Mittenachse (4') drehbar gelagertes Räumorgan mit einer Räumzinke (3) und einen oberhalb des Bodens (6) angeordneten Staukonus (7) umfasst, der mit der Mantelwand (8) und/oder dem Boden (6) einen Austragsspalt (9) bildet,
wobei die Räumzinke (3, 4') in das Schüttgut (26) eintaucht und ein bodenseitiges Ende hat, das auf einer Umlaufbahn um die Mittenachse (4') bewegt wird, wodurch die Räumzinke (3) das Schüttgut (26) zur Austragsöffnung (5) fördert,
**dadurch gekennzeichnet, dass**
das Räumorgan (2) innerhalb des Staukonus (7) angeordnet ist, so dass der Staukonus das Räumorgan (2) vollständig übergreift.

16. Verfahren nach Anspruch 15, **dadurch gekennzeichnet, dass** die wenigstens eine Räumzinke (3) unterhalb des Staukonus (7) bewegt wird, wobei der Staukonus (7) für das in der Schüttgutaufnahme (1') aufgenommene Schüttgut (26) eine in der zu der Mittenachse (4') weisenden Richtung abnehmende Stauhöhe (hₘᵢₙ ≤ h ≤ hₘₐₓ) einstellt.

17. Verfahren für das Behandeln von gasförmigem Fluid, insbesondere für das thermische und/oder katalytische Reinigen von schadstoffbelasteter Abluft, insbesondere von Abluft, die siliziumorganische Verbindungen enthält,
**gekennzeichnet durch** folgende Schritte:
Bereitstellen einer gemäß einem der Ansprüche 1 bis 10 ausgebildeten Einrichtung mit einer Schüttgutaufnahme (1'), die mit einem keramischen Granulat, einem keramischen Wärmespeicherkörper, einem Katalysatorkörper, einem kalk- und/oder kohlenstoffhaltigen partikelförmigen Schüttgut (26) angefüllt ist;
Zuführen von zu behandelndem gasförmigen Fluid in den Schüttgutbehälter (1') und Beaufschlagen von Schüttgut (26) in dem Schüttgutbehälter (1') mit dem zugeführten gasförmigen Fluid bei gleichzeitigem Austragen des Schüttguts (26) aus der Schüttgutaufnahme (1').

## Claims

1. Device (1) for receiving bulk material (26), said device having a bulk material receiving means (1') and having a discharge apparatus,
wherein the bulk material receiving means (1') has a bottom (6) with a discharge opening (5) and has an outer surface wall (8) and
wherein the discharge apparatus includes at least one clearing member (2) which is mounted on a bearing column (4) so as to be rotatable about a center axis (4') which passes through the discharge opening (5) and one pressure cone (7) which is arranged above the bottom (6) and forms a discharge gap (9) with the outer surface wall (8) and/or the bottom (6), wherein the discharge apparatus additionally includes a drive (17) for the clearing member (2), by way of which the clearing member (2) is able to be rotated about the center axis (4') in an operating direction of rotation (17') and
wherein at least one clearing tine (3) is fastened on the at least one clearing member (2), said clearing tine dipping into the bulk material (26) received in the bulk material receiving means (1') when the clearing member (2) moves in a rotating manner about the center axis (4') in the operating direction of rotation (17') and pushing the bulk material (26) toward the center axis (4'), wherein the bulk material (26) falls from the bottom (6) through the discharge opening (5),
**characterized in that**
the clearing member (2) is arranged in the interior of the pressure cone (7), such that the pressure cone (7) engages completely over the clearing member (2).

2. Device according to Claim 1, **characterized in that** the bottom is realized as a diffuser bottom (6) which extends ascending to the discharge opening (5).

3. Device (1) according to Claim 2, **characterized in that** the diffuser bottom (6) which extends ascending to the discharge opening (5) has a rounding portion and an inclined surface.

4. Device according to Claim 3, **characterized by** a first (outer) and a second (inner) clearing tine fastened on the clearing member (2) and realized as a spring tine (3) which are arranged offset with respect to one another in a radial and vertical manner and which, when the clearing member (2) moves in a rotating manner about the center axis in the operating direction of rotation (17'), dip into the bulk material received in the bulk material receiving means (1'), wherein the outer clearing tine (3) has one end (3') which ends in front of the rounding portion of the diffuser bottom (6), and the inner clearing tine (3) has one end which ends above the inclined surface of the diffuser bottom (6).

5. Device according to one of Claims 1 to 4, **characterized in that** the discharge opening (5) surrounds the bearing column (4) in a ring-shaped manner, and/or the at least one clearing tine (3), when the clearing member (2) moves in a rotating manner about the center axis (4'), is moved along a circumferential path, along which the distance (A) of one bottom end of the clearing tine (3) remote from the center axis (4') is smaller than half the diameter (D) of the opening of the pressure cone (7) pointing to the discharge opening (5), and/or the pressure cone (7) has an axis which is in alignment with the center axis (4').

6. Device according to one of Claims 1 to 5, **characterized by** at least one clearing tine (3) which is realized as a spring tine.

7. Device according to Claim 6, **characterized in that** the spring tine (3) consists of spring steel and has a first curved portion (14), which can be dipped into the bulk material and merges into a second portion (15) which is curved in an arc-shaped manner, is fastened to the clearing member (2) and is extended into the interior of the pressure cone (7).

8. Device according to Claim 7, **characterized in that** the at least one clearing tine (3) is a clearing rake (3a) .

9. Device according to one of Claims 1 to 8, **characterized in that** the clearing member is fastened on a drive shaft (16) which protrudes out of the bearing column (4), and/or the at least one clearing tine (3) has at least one clearing body (20) on its end (3') which reaches into the bulk material, and/or an inclined bottom (11) with side walls (12) arranged below the discharge opening (5) is provided, said inclined bottom opening out into a discharge channel - preferably connectable to a bulk material conveyor - or into a discharge pipe (13) - preferably connectable to a bulk material conveyor, and/or the clearing member is realized as a clearing arm (2), and/or several clearing arms (2) with at least one clearing tine (3) are provided, said clearing arms being mounted so as to be rotatable on the bearing column (4) and being arranged offset in an azimuthal manner with respect to one another with reference to the center axis (4').

10. Device according to one of Claims 1 to 9, **characterized in that** the pressure cone (7) is arranged so as to be vertically adjustable above the bottom (6) and/or **in that** the pressure cone (7) has a closed or a perforated wall, and/or the bulk material receiving means (1') is realized tapering in the manner of a funnel in the downwardly pointing direction, preferably tapering in a conical manner and the outer surface wall (8) merges in arc-shaped manner into the diffuser bottom (6), wherein the outer surface wall (8) is preferably realized in a closed or perforated manner.

11. Device according to one of Claims 1 to 10, wherein said device is realized as a bulk material container or as a bottom part of a bulk material container or as a clearing out apparatus with housing which is movable - in particular drivable - under a bulk material container.

12. Installation for treating gaseous fluid, in particular for the thermal and/or catalytic cleaning of polluted exhaust air, in particular of exhaust air which includes organic-silicon compounds, **characterized by** a device realized according to one of Claims 1 to 10, wherein the device has a connection (23) which communicates with the bulk material receiving means (1') for supplying the gaseous fluid to be treated in order to flow through the bulk material receiving means (1') with the gaseous fluid and to act upon bulk material (26) received therein with the gaseous fluid.

13. Installation according to Claim 12, **characterized in that** gaseous fluid supplied at the connection (23) is guided into the bulk material receiving means (1') along a flow path which passes through the discharge opening (5) at least in part.

14. Use of a device realized according to one of Claims 1 to 10 for receiving bulk material (26) having a bulk material receiving means and having a discharge apparatus in an exhaust air cleaning installation, in particular in a thermal and/or catalytic exhaust air cleaning apparatus, and/or for cleaning of exhaust air including silicon-organic compounds.

15. Method for discharging bulk material (26) out of a bulk material receiving means (1') by means of a discharge apparatus,
wherein the bulk material receiving means (1') has a bottom (6) with a discharge opening (5) and has an outer surface wall (8) and
wherein the discharge apparatus includes at least one clearing member (2) with a clearing tine (3), which is mounted so as to be rotatable about a center axis (4') which passes through the discharge opening (5), and one pressure cone (7) which is arranged above the bottom (6) and forms a discharge gap (9) with the outer surface wall (8) and/or the bottom (6),
wherein the clearing tine (3, 4') dips into the bulk material (26) and has a bottom end which is moved along a circumferential path about the center axis (4'), as a result of which the clearing tine (3) conveys the bulk material (26) to the discharge opening (5),
**characterized in that**
the clearing member (2) is arranged in the interior of the pressure cone (7), such that the pressure cone (7) engages completely over the clearing member (2).

16. Method according to Claim 15, **characterized in that** the at least one clearing tine (3) is moved below the pressure cone (7), wherein the pressure cone (7) sets a pressure height (hₘᵢₙ ≤ h ≤ hₘₐₓ), which decreases in the direction pointing to the center axis (4'), for the bulk material (26) received in the bulk material receiving means (1').

17. Method for treating gaseous fluid, in particular for the thermal and/or catalytic cleaning of polluted exhaust air, in particular of exhaust air which includes silicon-organic compounds,
**characterized by** the following steps:
prepare a device realized according to one of Claims 1 to 10 having a bulk material receiving means (1') which is filled with ceramic granular material, a ceramic heat storage body, a catalyst body and a particle-shaped bulk material (26) containing calcium and/or carbon;
supply gaseous fluid to be treated into the bulk material container (1') and act upon the bulk material (26) in the bulk material container (1') with the supplied gaseous fluid at the same time as discharging the bulk material (26) out of the bulk material receiving means (1').

## Revendications

1. Dispositif (1) destiné à recevoir de la matière en vrac (26), avec un réceptacle de matière en vrac (1') et un dispositif de décharge,
le réceptacle de matière en vrac (1') ayant un fond (6) avec une ouverture de décharge (5), et présentant une paroi d'enveloppe (8), et
l'ouverture de décharge comprenant au moins un organe de déblaiement (2) supporté en rotation sur un montant de support (4) autour d'un axe central (4') traversant l'ouverture de décharge (5), et un cône d'accumulation (7), disposé au-dessus du fond (6), qui forme une fente de décharge (9) avec la paroi d'enveloppe (8) et/ou avec le fond (6), le dispositif de décharge contenant en outre un entraînement (17) pour l'organe de déblaiement (2) avec lequel l'organe de déblaiement (2) peut être mis en rotation autour de l'axe central (4') dans un sens de rotation de travail (17'), et
au moins une dent de déblaiement (3) étant fixée sur l'organe de déblaiement (2) au moins au nombre de un, laquelle, lors d'un mouvement de rotation de l'organe de déblaiement (2) autour de l'axe central (4') dans le sens de rotation de travail (17'), plonge dans la matière en vrac (26) reçue dans le réceptacle de matière en vrac (1') et refoule la matière en vrac (26) vers l'axe central (4'), la matière en vrac (26) tombant du fond (6) à travers l'ouverture de décharge (5),
**caractérisé en ce que**
l'organe de déblaiement (2) est disposé à l'intérieur du cône d'accumulation (7) de telle sorte que le cône d'accumulation recouvre entièrement l'organe de déblaiement (2).

2. Dispositif selon la revendication 1, **caractérisé en ce que** le fond est constitué en tant que fond diffuseur (6) montant vers l'ouverture de décharge (5) .

3. Dispositif (1) selon la revendication 2,
**caractérisé en ce que**
le fond diffuseur (6) montant vers l'ouverture de décharge (5) a un tronçon d'arrondi et une surface oblique.

4. Dispositif selon la revendication 3, **caractérisé par** une première dent de déblaiement (extérieure) et une deuxième dent de déblaiement (intérieure) fixées sur l'organe de déblaiement (2), constituées en tant que dent garen (3), qui sont disposées avec un décalage entre elles radialement et en hauteur et qui, lors d'un mouvement de rotation de l'organe de déblaiement (2) autour de l'axe central dans le sens de rotation de travail (17'), plongent dans la matière en vrac reçue dans le réceptacle de matière en vrac (1'), la dent de déblaiement (3) extérieure ayant une extrémité (3') qui se termine avant le tronçon d'arrondi du fond diffuseur(6), et la dent de déblaiement (3) intérieure ayant une extrémité qui se termine au-dessus de la surface oblique du fond diffuseur(6) .

5. Dispositif selon l'une des revendications 1 à 4, **caractérisé en ce que** l'ouverture de décharge (5) entoure de façon annulaire le montant de support (4) et/ou **en ce que** la dent de déblaiement (3) au moins au nombre de un, lors du mouvement de rotation de l'organe de déblaiement (2) autour de l'axe central (4'), est déplacée sur une orbite sur laquelle la distance (A) d'une extrémité de la dent de déblaiement (3) côté fond éloignée de l'axe central (4') est plus petite que la moitié du diamètre (D) de l'ouverture du cône d'accumulation (7) tournée vers l'ouverture de décharge (5), et/ou le cône d'accumulation (7) a un axe en affleurement avec l'axe central (4').

6. Dispositif selon l'une des revendications 1 à 5, **caractérisé par** au moins une dent de déblaiement (3) constituée en tant que dent garen.

7. Dispositif selon la revendication 6, **caractérisé en ce que** la dent garen (3) est composée d'acier à ressort et présente un premier tronçon (14) arqué, pouvant plonger dans la matière en vrac, qui se transforme en un deuxième tronçon (15) courbé en forme d'arc, fixé sur l'organe de déblaiement (2) et qui s'étend à l'intérieur du cône d'accumulation (7) .

8. Dispositif selon la revendication 7, **caractérisé en ce que** la dent de déblaiement (3) au moins au nombre de un est un râteau de déblaiement (3a).

9. Dispositif selon l'une des revendications 1 à 8, **caractérisé en ce que** l'organe de déblaiement est fixé sur un arbre d'entraînement (16) dépassant du montant de support (4), et/ou la dent de déblaiement (3) au moins au nombre de un présente au moins un corps de déblaiement (20) à son extrémité (3') s'engageant dans la matière en vrac, et/ou **en ce qu'**il est prévu un fond oblique (11) avec des parois latérales (12) qui est disposé au-dessous de l'ouverture de décharge (5) et qui débouche dans une rigole de décharge - qui peut de préférence être raccordée à un convoyeur de matière en vrac - ou dans un tube de décharge (13) - qui peut de préférence être raccordé à un convoyeur de matière en vrac - et/ou **en ce que** l'organe de déblaiement est constitué en tant que bras de déblaiement (2), et/ou **en ce que** plusieurs bras de déblaiement (2) supportés en rotation sur le montant de support (4) et disposés avec un décalage azimutal entre eux par rapport à l'axe central (4') sont prévus avec au moins une dent de déblaiement (3).

10. Dispositif selon l'une des revendications 1 à 9, **caractérisé en ce que** le cône d'accumulation (7) est disposé de façon réglable en hauteur au-dessus du fond (6) et/ou **en ce que** le cône d'accumulation (7) présente une paroi fermée ou une paroi perforée et/ou **en ce que** le réceptacle de matière en vrac (1') est constitué de façon rétrécie en forme d'entonnoir dans la direction vers le bas, de préférence de façon rétrécie de manière conique, et la paroi d'enveloppe (8) se transforme de façon arquée en fond diffuseur (6), la paroi d'enveloppe (8) étant de préférence réalisée de façon fermée ou perforée.

11. Dispositif selon l'une des revendications 1 à 10, ce dispositif étant constitué en tant que conteneur de matière en vrac ou en tant que partie inférieure d'un conteneur de matière en vrac ou en tant que dispositif de déblayage avec carter, mobile sous conteneur de matière en vrac, en particulier déplaçable.

12. Installation pour le traitement de fluide gazeux, en particulier pour le nettoyage thermique et/ou catalytique d'air d'évacuation chargé de polluants, en particulier d'air d'évacuation qui contient des composés organosiliciés, **caractérisée par** un dispositif constitué selon l'une des revendications 1 à 10, le dispositif ayant un raccordement (23), communiquant avec le réceptacle de matière en vrac (1'), pour l'amenée du fluide gazeux à traiter afin d'amener le fluide gazeux à s'écouler à travers le réceptacle de matière en vrac (1') et d'exposer au fluide gazeux la matière en vrac (26) qui y est reçue.

13. Installation selon la revendication 12, **caractérisée en ce que**, sur le raccordement (23), le fluide gazeux amené est guidé dans le réceptacle de matière en vrac (1') sur un chemin d'écoulement traversant au moins partiellement l'ouverture de décharge (5).

14. Utilisation d'un dispositif constitué selon l'une des revendications 1 à 10 pour la réception de matière en vrac (26) avec un réceptacle de matière en vrac et avec un dispositif de décharge dans une installation de nettoyage d'air d'évacuation, en particulier dans un dispositif de nettoyage d'air d'évacuation thermique et/ou catalytique, et/ou pour le nettoyage d'air d'évacuation contenant des composés organosiliciés.

15. Procédé destiné à la décharge de matière en vrac (26) à partir d'un réceptacle de matière en vrac (1') à l'aide d'un dispositif de décharge,
le réceptacle de matière en vrac (1') ayant un fond (6) avec une ouverture de décharge (5), et présentant une paroi d'enveloppe (8), et
le dispositif de décharge comprenant au moins un organe de déblaiement, avec une dent de déblaiement (3), supporté en rotation autour d'un axe central (4') traversant l'ouverture de décharge (5), et comprenant un cône d'accumulation (7) qui est disposé au-dessus du fond (6) et qui forme une fente de décharge (9) avec la paroi d'enveloppe (8) et/ou avec le fond (6),
la dent de déblaiement (3, 4') plongeant dans la matière en vrac (26) et ayant une extrémité côté fond qui est déplacée sur une orbite autour de l'axe central (4'), ce qui fait que la dent de déblaiement (3) transporte la matière en vrac (26) vers l'ouverture de décharge (5),
**caractérisé en ce que**
l'organe de déblaiement (2) est disposé à l'intérieur du cône d'accumulation (7) de telle sorte que le cône d'accumulation recouvre complètement l'organe de déblaiement (2).

16. Procédé selon la revendication 15, **caractérisé en ce que** la dent de déblaiement (3) au moins au nombre de un est déplacée au-dessous du cône d'accumulation (7), le cône d'accumulation (7) réglant, pour la matière en vrac (26) reçue dans le réceptacle de matière en vrac (1'), une hauteur d'accumulation (hₘᵢₙ ≤ h ≤ hₘₐₓ) qui diminue dans la direction vers l'axe central (4').

17. Procédé pour le traitement de fluide gazeux, en particulier pour le nettoyage thermique et/ou catalytique d'air d'évacuation chargé de polluants, en particulier d'air d'évacuation qui contient des composés organosiliciés,
**caractérisé par** les étapes suivantes :
fourniture d'un dispositif constitué selon l'une des revendications 1 à 10, avec un réceptacle de matière en vrac (1') qui est rempli de granulat céramique, d'un corps accumulateur de chaleur céramique, d'un corps de catalyseur, d'une matière en vrac (26) de forme particulaire contenant du calcaire et/ou du carbone ;
amenée de fluide gazeux à traiter dans le réceptacle de matière en vrac (1') et exposition de la matière en vrac (26), dans le réceptacle de matière en vrac (1'), au fluide gazeux amené, simultanément avec une décharge de la matière en vrac (26) à partir du réceptacle de matière en vrac (1').
